# EUROPÄISCHE PATENTSCHRIFT

(11) **EP 2 771 376 B1**
(45) Veröffentlichungstag und Bekanntmachung des Hinweises auf die Patenterteilung: **24.02.2021**
(21) Anmeldenummer: 12783153.5
(22) Anmeldetag: 18.10.2012
(51) Int. Cl.: C08K 5/098, C08G 18/02, C08G 18/08, C08G 18/24, C08G 18/73, C08K 5/09, C08K 5/13, C08G 18/18, C08K 5/00, C08K 5/5333

(54) **FARBSTABILE HÄRTERZUSAMMENSETZUNGEN ENTHALTEND POLYISOCYANATE (CYCLO)ALIPHATISCHER DIISOCYANATE**
COLOUR-STABLE CURING COMPOSITIONS CONTAINING POLYISOCYANATES OF (CYCLO)ALIPHATIC DIISOCYANATES
COMPOSITIONS DE DURCISSEURS DE COULEUR STABLE CONTENANT DES POLYISOCYANATES DE DIISOCYANATES (CYCLO)ALIPHATIQUES

(30) Priorität: 28.10.2011 EP 11187007
(43) Veröffentlichungstag der Anmeldung: 03.09.2014
(73) Patentinhaber: BASF SE, 67056 Ludwigshafen am Rhein (DE)
(72) Erfinder: SCHÄFER, Harald, 68219 Mannheim (DE); BINDER, Horst, 68623 Lampertheim (DE); GENGER, Thomas, 67245 Lambsheim (DE); FLOJAHR, Daniel, 67063 Ludwigshafen (DE)
(74) Vertreter: BASF IP Association
(86) Internationale Anmeldenummer: PCT/EP2012/070624
(87) Internationale Veröffentlichungsnummer: WO 2013/060614

(56) Entgegenhaltungen:
- WO-A1-2008/116895
- WO-A1-2008/116897
- DE-A1-102009 005 712

## Beschreibung

Die vorliegende Erfindung betrifft neue farbdriftstabile Zusammensetzungen von Polyisocyanate von (cyclo)aliphatischen Diisocyanaten.

US 6376584 B1 beschreibt verschiedene Stabilisatoren zur Verwendung in Polyurethanzusammensetzungen, in denen Polyisocyanate mit Polyolen in Gegenwart von Dibutylzinndilaurat umgesetzt werden.

Nicht offenbart wird die Stabilisierungsproblematik, die erwächst, wenn man Polyisocyanatzusammensetzungen mit einem Katalysator vermischt und lagert.

US 7122588 B2 beschreibt Lacke, u.a. Polyurethanlacke, die mit Estern der hypophosphorigen Säure zur Verbesserung der Langlebigkeit und gegen Verfärbung stabilisiert sind.

Nicht offenbart wird die Stabilisierungsproblematik, die erwächst, wenn man Polyisocyanatzusammensetzungen mit einem Katalysator vermischt und lagert. Zudem ist die dort beschriebene Stabilisierung noch nicht ausreichend, so dass weiterhin Bedarf an einer verbesserten Stabilisierung besteht.

DE 19630903 beschreibt die Stabilisierung von Isocyanaten mit Hilfe von verschiedenen Phosphorverbindungen und Phenolen.

Nicht beschrieben wird jeweils die Anwesenheit von Katalysatoren für die Reaktion zwischen Isocyanatgruppen und dagegen reaktive Gruppen.

WO 2005/089085 beschreibt Polyisocyanatzusammensetzungen als Härter für 2K-Polyurethanlacke, die neben einem Katalysator für die Reaktion zwischen Isocyanatgruppen und dagegen reaktiven Gruppen eine Stabilisatormischung enthält, ausgewählt aus gehinderten Phenolen und sekundären Arylaminen sowie Organophosphiten, insbesondere Trialkylphosphiten. Explizit offenbart wird in den Beispielen eine Polyisocyanatzusammensetzungen, das Isocyanurat Tolonate HDT, mit Dibutylzinndilaurat als Katalysator in Butylacetat/Methylamylketon/Xylol 1:1:0,5. Nachteilig an Phosphiten, besonders an Trialkylphosphiten und insbesondere an Tributylphosphit, ist jedoch, dass sie einen sehr unangenehm stechenden Geruch aufweisen In der toxikologischen Einstufung ist Tributylphosphit gesundheitsschädlich bei Berührung mit der Haut und korrosiv. Triphenylphosphit ist reizend für Augen und Haut und sehr giftig für Wasserorganismen. Zudem sind Phosphite feuchtigkeitsempfindlich. Damit stellen diese Verbindungen zumindest vor und während der Einarbeitung in Polyisocyanatzusammensetzungen ein gesundheitliches, arbeitshygienisches und verarbeitungstechnisches Problem dar. Während die antioxidative Wirkung von aromatischen Phosphiten im Vergleich zu den aliphatischen niedriger ist, ist die Verfügbarkeit der aliphatischen Phosphite schlechter.

Die in den Patentschriften WO 2008/116893, WO 2008/116894, WO 2008/116895 beschriebenen Produktmischungen enthalten zwingend Polyisocyanat, Lewis-Säure, primäres Antioxidanz (sterisch gehindertes Phenol) und sekundäres Antioxidanz: Thioverbindung (WO 2008/116893), Phosphonit (WO 2008/116895) oder Phosphonat (WO 2008/116894). Dazu können diese optional einen sauren Stabilisator enthalten, bei dem es sich um eine Brønsted-Säure handelt. In Betracht kommen organische Carbonsäuren, Carbonsäurechloride, anorganische Säuren, wie z.B. Phosphorsäure, phosphorige Säure und Salzsäure und Diester z.B. die Alkyl- und/oder Aryldiester der Phosphorsäure und/oder phosphorigen Säure oder anorganische Säurechloride wie z.B. Phosphoroxychlorid oder Thionylchlorid. Vorzugsweise finden als saure Stabilisatoren Verwendung aliphatische Monocarbonsäuren mit 1 bis 8 C-Atomen, wie z.B. Ameisensäure, Essigsäure, aliphatische Dicarbonsäuren mit 2 bis 6 C-Atomen, wie z.B. Oxalsäure und insbesondere 2-Ethyl-hexansäure, Chlorpropionsäure und/oder Methoxyessigsäure. Alkyl- und/oder Aryl-diester der Phosphorsäure werden nicht als bevorzugt genannt. Sulfonsäurederivate werden nicht genannt.

Diese in den Patentanmeldungen genannten Brønsted-Säuren werden insbesondere eingesetzt um Viskositätsanstieg oder gar Gelierung von Polyisocyanaten in Substanz, also ohne Lösungsmittel, zu verhindern. So beschreibt WO 2008/068197 den entsprechenden Einsatz von Methoxyessigsäure, EP 643042 ebenfalls einen entsprechenden Einsatz. Die Verwendung zur Reduktion von Farbe bei Lagerung in Synergie zu sterisch gehinderten Phenolen wird nicht beschrieben.

Die Aufgabe der vorliegenden Erfindung bestand darin, weitere lagerstabile Polyisocyanatzusammensetzungen bereitzustellen, die bereits einen Katalysator für die Reaktion zwischen Isocyanatgruppen und mit diesen reaktive Gruppen enthalten und farbstabil sind, und deren Stabilisierungsmittel vom Geruch, der Toxikologie und/oder der Feuchtigkeitsempfindlichkeit eine unproblematische Arbeits- und Gesundheitshygiene erlauben, und deren Stabilisierungswirkung zumindest vergleichbar mit dem Stand der Technik ist. Die stabilisierende Wirkung sollte unabhängig von der Herkunft des monomeren Isocyanats sein.

Die Aufgabe wurde gelöst durch Polyisocyanatzusammensetzungen, enthaltend
- (A) mindestens ein Polyisocyanat, erhältlich durch Umsetzung mindestens eines monomeren Isocyanats,
- (B) mindestens eine Verbindung, die die Umsetzung von Isocyanatgruppen mit gegenüber Isocyanat reaktiven Gruppen zu beschleunigen vermag,
- (C) mindestens eine Brønsted-Säure mit einem pKs-Wert kleiner 4, ausgewählt aus der Gruppe bestehend aus C1) Dialkylphosphaten, C2) Arylsulfonsäuren und C3) Phosphonsäuredioctylester, wie Phosphonsäuredi-n-octylester und/oder Phosphonsäuredi-(2-ethylhexyl)-ester,
- (D) mindestens ein sterisch gehindertes Phenol.

Derartige Polyisocyanatzusammensetzungen weisen eine gute Farbstabilität über den zeitlichen Verlauf in einer Lagerung auf ("Farbdrift") und können mit Komponenten, die gegenüber Isocyanat reaktive Gruppen enthalten, in Polyurethanlacken umgesetzt werden.

Die eingesetzten monomeren Isocyanate können aromatisch, aliphatisch oder cycloaliphatisch sein, bevorzugt aliphatisch oder cycloaliphatisch, was in dieser Schrift kurz als (cyclo)aliphatisch bezeichnet wird, besonders bevorzugt sind aliphatische Isocyanate.

Aromatische Isocyanate sind solche, die mindestens ein aromatisches Ringsystem enthalten, also sowohl rein aromatische wie auch araliphatische Verbindungen.

Cycloaliphatische Isocyanate sind solche, die mindestens ein cycloaliphatisches Ringsystem enthalten.

Aliphatische Isocyanate sind solche, die ausschließlich gerade oder verzweigte Ketten enthalten, also acyclische Verbindungen.

Bei den monomeren Isocyanaten handelt es sich bevorzugt um Diisocyanate, die genau zwei Isocyanatgruppen tragen. Es kann sich aber prinzipiell auch um Monoisocyanate mit einer Isocyanatgruppe handeln.

Es kommen prinzipiell auch höhere Isocyanate mit im Mittel mehr als 2 Isocyanatgruppen in betracht. Dafür eignen sich beispielsweise Triisocyanate wie Triisocyanatononan, 2'-Isocyanatoethyl-(2,6-diisocyanatohexanoat), 2,4,6-Triisocyanatotoluol, Triphenylmethantriisocyanat oder 2,4,4'-Triisocyanatodiphenylether oder die Gemische aus Di-, Tri- und höheren Polyisocyanaten, die beispielsweise durch Phosgenierung von entsprechenden Anilin/Formaldehyd-Kondensaten erhalten werden und Methylenbrücken aufweisende Polyphenylpolyisocyanate darstellen.

Diese monomeren Isocyanate weisen keine wesentlichen Umsetzungsprodukte der Isocyanatgruppen mit sich selbst auf.

Bei den monomeren Isocyanaten handelt es sich bevorzugt um Isocyanate mit 4 bis 20 C-Atomen. Beispiele für übliche Diisocyanate sind aliphatische Diisocyanate wie Tetramethylendiisocyanat, 1,5-Pentamethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanats, (z.B. Methyl- oder Ethyl-2,6-diisocyanato-hexanoat),Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclo-hexyl)methan, 1-Isocyanato-3,3,5-trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1-me-thylcyclohexan sowie 3 (bzw. 4), 8 (bzw. 9)-Bis(isocyanatomethyl)-tricyclo[5.2.1.0^{2.6}]decan-Isomerengemische, sowie aromatische Diisocyanate wie 2,4- oder 2,6-Toluylendiisocyanat und deren Isomerengemische, m- oder p-Xylylendiisocyanat, 2,4'- oder 4,4'-Diisocyanatodiphenyl-methan und deren Isomerengemische, 1,3- oder 1,4-Phenylendiisocyanat, 1-Chlor-2,4-pheny-lendiisocyanat, 1,5-Naphthylendiisocyanat, Diphenylen-4,4'-diisocyanat, 4,4'-Diisocyanato-3,3'-dimethyldiphenyl, 3-Methyldi-phenylmethan-4,4'-diisocyanat, Tetramethylxylylendiisocyanat, 1,4-Diisocyanatobenzol oder Diphenylether-4,4'-diisocyanat.

Besonders bevorzugt sind 1,6-Hexamethylendiisocyanat, 1,3-Bis(isocyanatomethyl)cyclohexan, Isophorondiisocyanat und 4,4'- oder 2,4'-Di(isocyanatocyclohexyl)methan, ganz besonders bevorzugt sind Isophorondiisocyanat und 1,6-Hexamethylendiisocyanat, insbesondere bevorzugt ist 1,6-Hexamethylendiisocyanat.

Es können auch Gemische der genannten Isocyanate vorliegen.

Isophorondiisocyanat liegt zumeist als ein Gemisch, und zwar der cis- und trans-Isomere vor, in der Regel im Verhältnis von ca. 60:40 bis 90:10 (w/w), bevorzugt von 70:30-90:10. Dicyclohexylmethan-4,4'-diisocyanat kann ebenfalls als Gemisch der verschiedenen cis- und trans-Isomere vorliegen.

Für die vorliegende Erfindung können sowohl solche Diisocyanate eingesetzt werden, die durch Phosgenierung der korrespondierenden Amine erhalten werden, als auch solche, die ohne die Verwendung von Phosgen, d. h. nach phosgenfreien Verfahren, hergestellt werden. Nach Angaben der EP-A-0 126 299 (US 4 596 678), EP-A-126 300 (US 4 596 679) und EP-A-355 443 (US 5 087 739) beispielsweise können (cyclo)aliphatische Diisocyanate, z.B. wie 1,6-Hexamethylendiisocyanat (HDI), isomere aliphatische Diisocyanate mit 6 Kohlenstoffatomen im Alkylenrest, 4,4'- oder 2,4'-Di(isocyanatocyclohexyl)methan und 1-Isocyanato-3-isocyanato-methyl-3,5,5-trimethyl-cyclohexan (Isophorondiisocyanat bzw. IPDI) hergestellt werden durch Umsetzung der (cyclo)aliphatischen Diamine mit beispielsweise Harnstoff und Alkoholen zu (cyclo)-aliphatischen Biscarbaminsäureestern und deren thermische Spaltung in die entsprechenden Diisocyanate und Alkohole. Die Synthese erfolgt meist kontinuierlich in einem Kreislaufverfahren und optional in Gegenwart von N-unsubstituierten Carbaminsäureestern, Dialkylcarbonaten und anderen aus dem Reaktionsprozess zurückgeführten Nebenprodukten. So erhaltene Diisocyanate weisen in der Regel einen sehr geringen oder sogar nicht messbaren Anteil an chlorierten Verbindungen auf, was beispielsweise in Anwendungen in der Elektronikindustrie vorteilhaft ist.

In einer Ausführungsform der vorliegenden Erfindung weisen die eingesetzten Isocyanate an hydrolysierbarem Chlor weniger als 100 ppm auf, bevorzugt weniger als 50 ppm, insbesondere weniger als 30 ppm und speziell weniger als 20 ppm. Dies kann beispielsweise gemessen werden durch die ASTM-Vorschrift D4663-98. Die Gehalte an gesamtem Chlor liegen beispielsweise bei unter 1000 ppm, bevorzugt unter 800 ppm und besonders bevorzugt unter 500 ppm (ermittelt per argentometrischer Titration nach Hydrolyse).

Selbstverständlich können auch Gemische aus solchen monomeren Isocyanaten, die durch Umsetzung der (cyclo)aliphatischen Diamine mit beispielsweise Harnstoff und Alkoholen und Spaltung der erhaltenen (cyclo)aliphatischen Biscarbaminsäureester erhalten worden sind, mit solchen Diisocyanaten, die durch Phosgenierung der korrespondierenden Amine erhalten worden sind, eingesetzt werden.

Die Polyisocyanate (A), zu denen die monomeren Isocyanate oligomerisiert werden können, sind in der Regel wie folgt charakterisiert:
Die mittlere NCO Funktionalität solcher Verbindungen beträgt in der Regel mindestens 1,8 und kann bis zu 8 betragen, bevorzugt 2 bis 5 und besonders bevorzugt 2,4 bis 4.

Der Gehalt an Isocyanatgruppen nach der Oligomerisierung, berechnet als NCO = 42 g/mol, beträgt, wenn nicht anders angegeben, in der Regel von 5 bis 25 Gew%.

Bevorzugt handelt es sich bei den Polyisocyanaten (A) um folgende Verbindungen:
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im Allgemeinen einen NCO-Gehalt von 10 bis 30 Gew.-%, insbesondere 15 bis 25 Gew.-% und eine mittlere NCO-Funktionalität von 2,6 bis 8.
   Die Isocyanuratgruppen aufweisenden Polyisocyanate können in geringerem Umfang auch Urethan- und/oder Allophanat-Gruppen enthalten, bevorzugt mit einem Gehalt gebundenen Alkohols von kleiner 2 % bezogen auf das Polyisocyanat.
2) Uretdiongruppen aufweisende Polyisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Die Uretdiongruppen aufweisenden Polyisocyanate werden häufig im Gemisch mit anderen Polyisocyanaten, insbesondere den unter 1) genannten, erhalten. Uretdiongruppen aufweisende Polyisocyanate weisen üblicherweise Funktionalitäten von 2 bis 3 auf. Dies umfasst auch Uretdion-/lsocyanurat-Gemische beliebiger Zusammensetzung, insbesondere mit einem Gehalt an monomerem Uretdion (Dimer) von 1-40%, insbesondere 3-15, insbesondere 5-10 %.
   Dazu können die Diisocyanate unter Reaktionsbedingungen umgesetzt werden, unter denen sowohl Uretdiongruppen als auch die anderen Polyisocyanate gebildet werden, oder zunächst die Uretdiongruppen gebildet und diese anschließend zu den anderen Polyisocyanaten umgesetzt werden oder die Diisocyanate zunächst zu den anderen Polyisocyanaten und diese anschließend zu Uretdiongruppen-haltigen Produkten umgesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris-(6-isocyanatohexyl)-biuret oder dessen Gemische mit seinen höheren Homologen. Diese Biuretgruppen aufweisenden Polyisocyanate weisen im Allgemeinen einen NCO-Gehalt von 18 bis 24 Gew.-% und eine mittlere NCO-Funktionalität von 2,8 bis 6 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Diisocyanat, beispielsweise Hexamethylendiisocyanat oder Isophorondiisocyanat, mit ein- oder mehrwertigen Alkoholen. Diese Urethan- und/oder Allophanatgruppen aufweisenden Polyisocyanate haben im Allgemeinen einen NCO-Gehalt von 12 bis 24 Gew.-% und eine mittlere NCO-Funktionalität von 2,0 bis 4,5. Solche Urethan- und/oder Allophanatgruppen aufweisenden Polyisocyanate können unkatalysiert oder bevorzugt in Gegenwart von Katalysatoren, wie beispielsweise Ammoniumcarboxylaten oder -hydroxiden, oder Allophanatisierungskatalysatoren, z.B. Wismut-, Kobalt-, Cäsium-, Zn-(II)- oder Zr-(IV)-Verbindungen, jeweils in Anwesenheit von ein-, zwei- oder mehrwertigen, bevorzugt einwertigen Alkoholen, hergestellt werden.
   Diese Urethan- und/oder Allophanatgruppen aufweisenden Polyisocyanate treten häufig in Mischformen mit den unter 1) genannten Polyisocyanaten auf.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid zugänglich.
6) Iminooxadiazindiongruppen enthaltende Polyisocyanate, vorzugsweise von Hexamethylendiisocyanat oder Isophorondiisocyanat abgeleitet. Solche Iminooxadiazindiongruppen enthaltenden Polyisocyanate sind aus Diisocyanaten mittels spezieller Katalysatoren herstellbar.
7) Uretonimin-modifizierte Polyisocyanate.
8) Carbodiimid-modifizierte Polyisocyanate.
9) Hyperverzweigte Polyisocyanate, wie sie beispielsweise bekannt sind aus der DE-A1 10013186 oder DE-A1 10013187.
10) Polyurethan-Polyisocyanat-Präpolymere, aus Di- und/oder Polyisocyanaten mit Alkoholen.
11) Polyharnstoff-Polyisocyanat-Präpolymere.
12) Die Polyisocyanate 1)-11), bevorzugt 1), 3), 4) und 6) können nach deren Herstellung in Biuretgruppen- oder Urethan-/Allophanat-Gruppen aufweisende Polyisocyanate mit aromatisch, cycloaliphatisch oder aliphatisch gebundenen, bevorzugt (cyclo)aliphatisch gebundenen Isocyanatgruppen, überführt werden. Die Bildung von Biuretgruppen erfolgt beispielsweise durch Zugabe von Wasser oder Umsetzung mit Aminen. Die Bildung von Urethan- und/oder Allophanatgruppen erfolgt durch Umsetzung mit ein-, zwei- oder mehrwertigen, bevorzugt einwertigen Alkoholen, optional in Gegenwart von geeigneten Katalysatoren. Diese Biuret- oder Urethan-/Allophanatgruppen aufweisenden Polyisocyanate weisen im Allgemeinen einen NCO-Gehalt von 10 bis 25 Gew.-% und eine mittlere NCO-Funktionalität von 3bis 8 auf.
13) Hydrophil modifizierte Polyisocyanate, d.h. Polyisocyanate, die neben den unter 1-12 beschriebenen Gruppen solche enthalten, die formal durch Addition von Molekülen mit NCO-reaktiven Gruppen und hydrophilierenden Gruppen an die Isocyanatgruppen obiger Moleküle entstehen. Bei letzteren handelt es sich um nichtionische Gruppen wie Alkyl-Polyethylenoxid und/oder ionische, welche von Phosphorsäure, Phosphonsäure, Schwefelsäure oder Sulfonsäure, bzw. ihren Salzen abgeleitet sind.
14) Modifizierte Polyisocyanate für Dual Cure Anwendungen, d.h. Polyisocyanate, die neben den unter 1-11 beschriebenen Gruppen solche enthalten, die formal durch Addition von Molekülen mit NCO-reaktiven Gruppen und durch UV- oder aktinische Strahlung vernetzbare Gruppen an die Isocyanatgruppen obiger Moleküle entstehen. Bei diesen Molekülen handelt es sich beispielsweise um Hydroxyalkyl(meth)acrylate und andere Hydroxy-Vinylverbindungen.

Die oben aufgeführten Diisocyanate oder Polyisocyanate können auch zumindest teilweise in blockierter Form vorliegen.

Zur Blockierung eingesetzte Verbindungsklassen sind beschrieben in D. A. Wicks, Z. W. Wicks, Progress in Organic Coatings, 36, 148-172 (1999), 41, 1-83 (2001) sowie 43, 131-140 (2001).

Beispiele für zur Blockierung eingesetzte Verbindungsklassen sind Phenole, Imidazole, Triazole, Pyrazole, Oxime, N-Hydroxyimide, Hydroxybenzoesäureester, sekundäre Amine, Lactame, CH-acide cyclische Ketone, Malonsäureester oder Alkylacetoacetate.

In einer bevorzugten Ausführungsform der vorliegenden Erfindung ist das Polyisocyanat ausgewählt aus der Gruppe bestehend aus Isocyanuraten, Biureten, Urethanen und Allophanaten, bevorzugt aus der Gruppe bestehend aus Isocyanuraten, Urethanen und Allophanaten, besonders bevorzugt handelt es sich um ein isocyanuratgruppenhaltiges Polyisocyanat.

In einer besonders bevorzugten Ausführungsform handelt es sich bei dem Polyisocyanat um Isocyanuratgruppen enthaltende Polyisocyanate von 1,6-Hexamethylendiisocyanat.

In einer weiteren bevorzugten Ausführungsform handelt es sich bei dem Polyisocyanat um ein Gemisch von Isocyanuratgruppen enthaltenden Polyisocyanaten, ganz besonders bevorzugt von 1,6-Hexamethylendiisocyanat und von Isophorondiisocyanat.

In einer besonders bevorzugten Ausführungsform handelt es sich bei dem Polyisocyanat um ein Gemisch enthaltend niedrigviskose Polyisocyanate, bevorzugt Isocyanuratgruppen enthaltende Polyisocyanate, mit einer Viskosität von 600-1500 mPa*s, insbesondere unter 1200 mPa*s, niederviskose Urethane und/oder Allophanate mit einer Viskosität von 200-1600 mPa*s, insbesondere 600-1500 mPa*s, und/oder Iminooxadiazindiongruppen enthaltende Polyisocyanate.

In dieser Schrift wird die Viskosität bei 23 °C gemäß DIN EN ISO 3219/A.3 in einem Kegel-Platte-System mit einem Geschwindigkeitsgefälle von 1000 s⁻¹ angegeben, falls nicht anders vermerkt.

Das Verfahren zur Herstellung der Polyisocyanate kann erfolgen, wie in WO 2008 / 68198 beschrieben, dort besonders von Seite 20, Zeile 21 bis Seite 27, Zeile15.

Die Reaktion kann beispielsweise abgebrochen werden, wie dort von Seite 31, Zeile 19 bis Seite 31, Zeile 31 beschrieben und die Aufarbeitung erfolgen wie dort beschrieben von Seite 31, Zeile 33 bis Seite 32, Zeile 40.

Die Reaktion kann alternativ und bevorzugt erfolgen wie in der WO 2005 / 087828 für Ammonium-alpha-hydroxycarboxylat-Katalysatoren beschrieben. Auf die in WO 2005/87828, Seite 3, Zeile 29 bis Seite 6, Zeile 7 beschriebenen Ammonium α-Hydroxycarboxylate sei hiermit ausdrücklich Bezug genommen.

Insbesondere als Ammonium Kationen seien erwähnt Tetraoctylammonium, Tetramethylammonium, Tetraethylammonium, Tetra-n-butylammonium, Trimethylbenzylammonium, Triethylbenzylammonium, Tri-n-butylbenzylammonium, Trimethylethylammonium, Tri-n-butylethylammo--nium, Triethylmethylammonium, Tri-n-butylmethylammonium, Di-iso-Propyldiethylammonium, Di-iso-Propyl-ethyl-methylammonium, Di-iso-Propyl-ethyl-benzylammonium, N,N-Dimethyl-piperidinium, N,N-Dimethylmorpholinium, N,N-Dimethylpiperazinium oder N-Methyl-diazabicy-clo[2,2,2]octan. Bevorzugte Alkylammoniumionen sind Tetraoctylammonium, Tetramethylammonium, Tetraethylammonium und Tetra-n-butylammonium, besonders bevorzugt sind Tetramethylammonium und Tetraethylammonium und ganz besonders bevorzugt ist Tetramethylammonium und Benzyltrimethylammonium.

Insbesondere als α-Hydroxycarboxylate seien erwähnt Glykolsäure (Hydroxyessigsäure), Milchsäure, Zitronensäure, 2-Methylmilchsäure (a-Hydroxy-iso-buttersäure), 2-Hydroxy-2-methylbuttersäure, 2-Hydroxy-2-ethylbuttersäure, 2-Hydroxy-3-methylbuttersäure, 2-Hydroxycapronsäure, Äpfelsäure, Weinsäure, Glucuronsäure, Gluconsäure, Citramalsäure, Saccharinsäure, Ribonsäure, Benzilsäure, Chinasäure, Mandelsäure, Hexahydromandelsäure, 2-Hydroxycapronsäure oder 3-Phenylmilchsäure. Bevorzugte α-Hydroxycarboxylate sind Milchsäure, 2-Methylmilchsäure (α-Hydroxy-iso-buttersäure), 2-Hydroxy-2-methylbuttersäure und 2-Hydroxycapronsäure, besonders bevorzugt sind Milchsäure, 2-Methylmilchsäure (α-Hydroxy-iso-buttersäure) und 2-Hydroxycapronsäure und ganz besonders bevorzugt sind α-Hydroxy-iso-buttersäure und Milchsäure.

Die Reaktion kann beispielsweise abgebrochen werden, wie dort von Seite 11, Zeile 12 bis Seite 12, Zeile 5 beschrieben.

Die Reaktion kann alternativ wie in der CN 10178994A oder CN 101805304 beschrieben erfolgen.

Bei thermisch labilen Katalysatoren ist es weiterhin auch möglich, die Reaktion durch Erhitzen des Reaktionsgemischs auf eine Temperatur oberhalb von mindestens 80°C, bevorzugt mindestens 100 °C, besonders bevorzugt mindestens 120 °C abzubrechen.

Sowohl bei thermisch nicht-labilen als auch bei thermisch labilen Katalysatoren besteht die Möglichkeit, durch Zugabe von Deaktivatoren die Reaktion bei niedrigeren Temperaturen abzubrechen. Deaktivatoren können auch stöchiometrisch im Unterschuss zum Katalysator zugegeben werden, wenn der Katalysator zumindest partiell thermisch zerstört wird oder das Produkt bei nachfolgender Lagerung in der Viskosität stabil ist (z.B. bei Lagerung in der 100%-Form über 10 Wochen bei 80 °C unter Stickstoff seine Viskosität nicht mehr als verdreifacht). Geeignete Deaktivatoren sind beispielsweise Chlorwasserstoff, Phosphorsäure, organische Phosphate, wie Dibutylphosphat oder Diethylhexylphosphat, Phosphonate wir Dioctyl-phosphonat und Carbamate wie Hydroxyalkylcarbamat. Bevorzugt sind Dibutylphosphat oder Diethylhexylphosphat.

Diese Verbindungen werden pur oder verdünnt in geeigneter Konzentration, die zum Reaktionsabbruch erforderlich ist, zugegeben. Als Lösungsmittel geeignet sind beispielsweise das Monomer, Alkohole wie Ethylhexanol oder Methylglycol, oder polare, aprotische Lösungsmittel wie Propylencarbonat.

Als Lewis-saure organische Metallverbindungen (B) kommen z.B. Zinnverbindungen in Frage, wie beispielsweise Zinn-(II)-salze von organischen Carbonsäuren, z.B. Zinn-(II)-diacetat, Zinn-(II)-dioctoat, Zinn-(II)-bis(ethylhexanoat) und Zinn-(II)-dilaurat und die Dialkylzinn-(IV)-salze von organischen Carbonsäuren, z.B. Dimethylzinn-diacetat, Dibutylzinn-diacetat, Dibutylzinn-dibutyrat, Dibutylzinn-bis(2-ethylhexanoat), Dibutylzinn-dilaurat, Dibutylzinn-maleat, Dioctylzinn-dilaurat und Dioctylzinn-diacetat.

Weitere bevorzugte Lewis-saure organische Metallverbindungen sind Zinksalze, beispielsweise Zink-(II)-diacetat und Zink-(II)-dioctoat.

Als Zinn- und Zink-freie Alternativen werden u.a. organische Metallsalze des Wismuts, Zirkons, Titans, Aluminiums, Eisens, Mangans, Nickels und Cobalts eingesetzt.

Dies sind z.B. Zirkoniumtetraacetylacetonat (z.B. K-KAT® 4205 der Firma King Industries); Zirkoniumdionate (z.B. K-KAT® XC-9213; XC-A 209 und XC-6212 der Firma King Industries); Wismut-Verbindungen, insbesondere Tricarboxylate (z.B. K-KAT® 348, XC-B221; XC-C227, XC 8203 der Firma King Industries); Aluminiumdionat (z.B. K-KAT® 5218 der Firma King Industries). Zinn- und Zink-freie Katalysatoren werden ansonsten z.B. auch unter dem Handelsnamen Borchi® Kat der Firma Borchers, TK der Firma Goldschmidt oder BICAT® der Firma Shepherd, Lausanne angeboten.

Auch Bismut- und Kobalt-Katalysatoren, Cer-Salze wie Ceroctoate, und Cäsiumsalze können als Katalysatoren eingesetzt werden.

Bismut-Katalysatoren sind insbesondere Bismut-carboxylate, insbesondere Bismut-octoate, - ethylhexanoate, -neodecanoate, oder -pivalate; beispielsweise K-KAT 348 und XK-601 von King Industries, TIB KAT 716, 716LA, 716XLA, 718, 720, 789 von TIB Chemicals und solchen von Shepherd Lausanne, sowie Katalysator-Mischungen von z.B. Bismut- und Zink-Organylen.

Weitere Metallkatalysatoren werden von Blank et al. in Progress in Organic Coatings, 1999, Vol. 35, Seiten 19-29 beschrieben.

Diese Katalysatoren sind für lösungsmittel-, wasser-basierte und/oder blockierte Systeme geeignet.

Molybdän-, Wolfram- und Vanadium-Katalysatoren, werden insbesondere für den Umsatz blockierter Polyisocyanate unter WO 2004/076519 und WO 2004/076520 beschrieben.

Auch Cäsiumsalze können als Katalysatoren eingesetzt werden. Als Cäsiumsalze kommen dabei solche Verbindungen in Betracht, in denen folgende Anionen eingesetzt werden: F⁻, Cl⁻, ClO⁻, ClO₃⁻, ClO₄⁻, Br⁻, J⁻, JO₃⁻, CN⁻, OCN⁻, NO₂⁻, NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht. Bevorzugt sind dabei Cäsiumcarboxylate, bei denen das Anion den Formeln (CₙH₂ₙ₋₁O₂)- sowie (Cₙ₊₁H₂ₙ₋₂O₄)²⁻ mit n gleich 1 bis 20, gehorcht. Besonders bevorzugte Cäsiumsalze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Format, Acetat, Propionat, Hexanoat und 2-Ethylhexanoat.
Bevorzugte Lewis-saure organische Metallverbindungen sind Dimethylzinn-diacetat, Dibutylzinn-dibutyrat, Dibutylzinn-bis(2-ethylhexanoat), Dibutylzinn-dilaurat, Dioctylzinn-dilaurat, Zink-(II)-diacetat, Zink-(II)-dioctoat, Zirkon-Acetylacetonat und Zirkon-2,2,6,6-tetramethyl-3,5-heptandionat und Wismut-Verbindungen.

Besonders bevorzugt ist Dibutylzinndilaurat.

Brønsted-Säuren (C) sind H-acide Verbindungen. Dabei handelt es sich um **C1**) Dialkylphosphate, **C2**) Arylsulfonsäuren und/oder **C3**) Phosphonsäuredioctylester, wie Phosphonsäuredi-n-octylester und/oder Phosphonsäuredi-(2-ethylhexyl)-ester.

Dialkylphosphate **C1** sind Mono- und Di-C₁- bis C₁₂-Alkylphosphate und deren Gemische, bevorzugt die Dialkylphosphate, besonders bevorzugt solche mit C₁- bis C₈-Alkylgruppen, ganz besonders bevorzugt mit C₂- bis C₈-Alkylgruppen und insbesondere solche mit C₄- bis C₈-Alkylgruppen.

Die Alkylgruppen in Dialkylphosphaten können dabei gleich oder verschieden sein, bevorzugt sind sie gleich.

Beispiele für C₁- bis C₁₂-Alkylgruppen sind Methyl, Ethyl, iso-Propyl, n-Propyl, n-Butyl, iso-Butyl, sek-Butyl, tert.-Butyl, n-Hexyl, n-Heptyl, n-Octyl, n-Decyl, n-Dodecyl, 2-Ethylhexyl und 2-Propylheptyl.

Dies sind insbesondere Mono- und Dialkylphosphate und deren Gemische wie
- Di-(ethylhexyl)-phosphat
- Dibutylphosphat
- Diethylphosphat
- Nacure® 4000 (früher Nacure® C 207), einem nicht näher definierten Alkylphosphorsäureester, der Firma King Industries
- Nacure® 4054, einem nicht näher definierten Alkylphosphorsäureester, der Firma King Industries
- Cycat® 296-9, einem nicht näher definierten Alkylphosphorsäureester, der Firma Cytec Bevorzugt für den Einsatz in Polyisocyanaten ist der Einsatz als 100%-iges Produkt oder in einem Lösungsmittel, welches nicht mit Isocyanat-Gruppen reagiert.

Verbindungen **C1** werden in der Regel in Mengen bezogen auf das Polyisocyanat von 5 bis 1000, bevorzugt 10 bis 600, besonders bevorzugt 20 bis 200, ganz besonders bevorzugt 20 bis 80 Gew.ppm zugesetzt.

Arylsulfonsäuren **C2** sind beispielsweise Benzol- oder Naphthalinderivate, insbesondere alkylierte Benzol oder Naphthalinderivate.

Beispiele bevorzugter Sulfonsäuren umfassen 4-Alkylbenzolsulfonsäuren mit Alkylresten aus 6 bis 12 C-Atomen wie beispielsweise 4-Hexylbenzolsulfonsäure, 4-Octylbenzolsulfonsäure, 4-Decylbenzolsulfonsäure oder 4-Dodecylbenzolsulfonsäure. Hierbei kann es sich in prinzipiell bekannter Art und Weise auch um technische Produkte handeln, welche eine Verteilung verschiedener Alkylreste unterschiedlicher Länge aufweisen.

Als besonders bevorzugte Säuren genannt seien:
- Benzolsulfonsäure
- Para-toluolsulfonsäure
- Para-ethylbenzolsulfonsäure
- Dodecylbenzolsulfonsäure
- Bisnonylnaphthalinsulfonsäure
- Bisnonylnaphthalinbissulfonsäure
- Bisdodecylnaphthalinsulfonsäure
- Nacure® XC-C210 (hydrophober Säurekatalysator nicht angegebener Struktur der Firma King Industries)

Verbindungen C1 werden in der Regel in Mengen bezogen auf das Polyisocyanat von 1 bis 600, bevorzugt 2 bis 100, besonders bevorzugt 5 bis 50 Gew.ppm zugesetzt.

Phosphonate sind niedervalente, phosphorhaltige Verbindungen. Das Phosphonat **C3** ist ein Phosphonsäuredioctylester. Explizit genannt sind:
- Phosphonsäuredi-n-octylester wie Irgafos® OPH (s. nachfolgende Abbildung) und/oder
- Phosphonsäuredi-(2-ethylhexyl)-ester

Verbindungen C3 werden in der Regel in Mengen bezogen auf das Polyisocyanat von 10 bis 1000, bevorzugt 20 bis 600, besonders bevorzugt 50 bis 300 Gew.ppm.

Sterisch gehinderte Phenole (D) haben im Sinne der Erfindung die Funktion eines primären Antioxidanz. Darunter werden vom Fachmann üblicherweise Verbindungen verstanden, die Radikale abfangen.

Derartige sterisch gehinderte Phenole sind beispielsweise beschrieben in WO 2008/116894, bevorzugt die dort von Seite 14, Zeile 10 bis Seite 16, Zeile 10 beschriebenen Verbindungen. Dabei handelt es sich bevorzugt um solche Phenole, die an dem aromatischen Ring genau eine phenolische Hydroxygruppe aufweisen und besonders bevorzugt um solche, die in den ortho-Positionen, ganz besonders bevorzugt in ortho- und para-Position zur phenolischen Hydroxygruppe einen Substituenten, bevorzugt eine Alkylgruppe aufweisen, insbesondere um Alkyl-3-(3,5-di-tert-butyl-4-hydroxyphenyl)-propionate, respektive um substituierte Alkyl-Derivate solcher Verbindungen.

Solche Phenole können auch Bestandteile eines polyphenolischen Systems mit mehren Phenol-Gruppen sein Pentaerythrit-tetrakis(3-(3,5-di-tert-butyl-4-hydroxyphenyl)propionat (z.B. Irganox® 1010); Ethylen-bis(oxyethylen)-bis-(3-(5-tert.-butyl-4-hydroxy-m-tolyl)-propionat) (z.B. Irganox 245); 3,3',3",5,5',5"-Hexa-tert-butyl-a,a',a"-(mesitylen-2,4,6-triyl)tri-p-kresol (z.B. Irganox® 1330); 1,3,5-Tris(3,5-di-tert-butyl-4-hydroxybenzyl)-1,3,5-triazin-2,4,6(1H,3H,5H)-trion (z.B. Irganox® 3114), jeweils Produkte der Ciba Spezialitätenchemie, jetzt BASF SE.

Entsprechende Produkte sind z.B. unter den Handelsnamen Irganox® (BASF SE), Sumilizer® der Firma Sumitomo, Lowinox® der Fa. Great Lakes, Cyanox® der Fa. Cytec erhältlich.

Möglich sind auch z.B. Thiodiethylen-bis-[3-[3,5-di-tert.-butyl-4-hydroxyphenyl]-propionat] (Irganox® 1035) und 6,6'-Di-tert.-butyl-2,2'-thiodi-p-kresol (z.B. Irganox® 1081), jeweils Produkte BASF SE.

Bevorzugt sind 2,6-Di-tert.-butyl-4-methylphenol (BHT); Isooctyl-3-(3,5-di-tert-butyl-4-hydroxyphenyl)-propionat (Irganox® 1135, CAS-Nr. 146598-26-7), Octadecyl-3-(3,5-di-tert-butyl-4-hydroxyphenyl)-propionat (Irganox® 1076, CAS-Nr. 2082-79-3) und Pentaerythrit-tetrakis(3-(3,5-di-tert-butyl-4-hydroxyphenyl)propionat (CAS-Nr. 6683-19-8; z.B. Irganox® 1010).

Des Weiteren kann noch ein Lösungsmittel oder Lösungsmittelgemisch (E) anwesend sein.

Als Lösungsmittel für die Polyisocyanatkomponente, wie auch die Bindemittel- und ggf. weitere Komponenten einsetzbar sind solche, die keine gegenüber Isocyanatgruppen oder verkappten Isocyanatgruppen reaktiven Gruppen aufweisen und in denen die Polyisocyanate zu mindestens 10 Gew%, bevorzugt zu mindestens 25, besonders bevorzugt zu mindestens 50, ganz besonders bevorzugt zu mindestens 75, insbesondere zu mindestens 90 und speziell zu mindestens 95 Gew% löslich sind.

Beispiele für derartige Lösungsmittel sind aromatische (einschließlich alkylierter Benzole und Naphthaline) und/oder (cyclo)aliphatische Kohlenwasserstoffe und deren Gemische, chlorierte Kohlenwasserstoffe, Ketone, Ester, alkoxylierte Alkansäurealkylester, Ether, respektive Gemische der Lösungsmittel.

Als aromatische Kohlenwasserstoffgemische sind solche bevorzugt, die überwiegend aromatische C₇- bis C₁₄-Kohlenwasserstoffe umfassen und einen Siedebereich von 110 bis 300 °C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische.

Beispiele dafür sind die Solvesso®-Marken der Firma ExxonMobil Chemical, besonders Solvesso® 100 (CAS-Nr. 64742-95-6, überwiegend C₉ und C₁₀-Aromaten, Siedebereich etwa 154 - 178 °C), 150 (Siedebereich etwa 182-207 °C) und 200
(CAS-Nr. 64742-94-5), sowie die Shellsol®-Marken der Firma Shell, Caromax® (z.B. Caromax® 18) der Firma Petrochem Carless und Hydrosol der Firma DHC (z.B. als Hydrosol® A 170). Kohlenwasserstoffgemische aus Paraffinen, Cycloparaffinen und Aromaten sind auch unter den Bezeichnungen Kristallöl (beispielsweise Kristallöl 30, Siedebereich etwa 158 - 198 °C oder Kristallöl 60: CAS-Nr. 64742-82-1), Testbenzin (beispielsweise ebenfalls CAS-Nr. 64742-82-1) oder Solventnaphtha (leicht: Siedebereich etwa 155 - 180 °C, schwer: Siedebereich etwa 225 - 300 °C) im Handel erhältlich. Der Aromatengehalt derartiger Kohlenwasserstoffgemische beträgt in der Regel mehr als 90 Gew%, bevorzugt mehr als 95, besonders bevorzugt mehr als 98 und ganz besonders bevorzugt mehr als 99 Gew%. Es kann sinnvoll sein, Kohlenwasserstoffgemische mit einem besonders verringerten Gehalt an Naphthalin einzusetzen.

(Cyclo)aliphatische Kohlenwasserstoffe sind beispielsweise Dekalin, alkyliertes Dekalin und Isomerengemische von geradlinigen oder verzweigten Alkanen und/oder Cycloalkanen.

Der Gehalt an aliphatischen Kohlenwasserstoffen beträgt in der Regel weniger als 5, bevorzugt weniger als 2,5 und besonders bevorzugt weniger als 1 Gew%.

Ester sind beispielsweise n-Butylacetat, Ethylacetat, 1-Methoxypropylacetat-2 und 2-Methoxyethylacetat.

Ether sind beispielsweise THF, Dioxan sowie die Dimethyl-, -ethyl- oder -n-butylether von Ethylenglykol, Diethylenglykol, Triethylenglykol, Propylenglykol, Dipropylenglykol oder Tripropylenglykol.

Ketone sind beispielsweise Aceton, Diethylketon, Ethylmethylketon, Isobutylmethylketon, Methylamylketon und tert.-Butylmethylketon.

Bevorzugte Lösungsmittel sind n-Butylacetat, Ethylacetat, 1-Methoxypropylacetat-2,2-Methoxyethylacetat, sowie deren Gemische, insbesondere mit den oben aufgeführten aromatischen Kohlenwasserstoffgemischen, insbesondere Xylol und Solvesso® 100.

Derartige Gemische können im Volumenverhältnis 5:1 bis 1:5 erstellt werden, bevorzugt im Volumenverhältnis 4:1 bis 1:4, besonders bevorzugt im Volumenverhältnis 3:1 bis 1:3 und ganz besonders bevorzugt im Volumenverhältnis 2:1 bis 1:2.

Bevorzugte Beispiele sind Butylacetat/Xylol, Methoxypropylacetat/Xylol 1:1, Butylacetat/Solventnaphtha 100 1:1, Butylacetat/Solvesso® 100 1:2 und Kristallöl 30/Shellsol® A 3:1. Bevorzugt sind Butylacetat, 1-Methoxypropylacetat-2, Methylamylketon, Xylol und Solvesso® 100.

Überraschenderweise wurde gefunden, dass die Lösungsmittel in Bezug auf die Aufgabenstellung unterschiedlich problematisch sind. Patentgemäße Polyisocyanatzusammensetzungen, welche Ketone oder Aromatengemische (beispielsweise Solvent Naphtha-Mischungen) enthalten, sind besonders kritisch in Bezug auf Farbzahlentstehung bei Lagerung. Dagegen sind Ester, Ether, engere Aromatenschnitte wie Xylol und dessen Isomerengemische unproblematischer. Überraschend ist dies insofern, als Xylole analog den Aromatengemischen ebenfalls benzylische Wasserstoff-Atome tragen, die an einer Farbentstehung beteiligt sein könnten. Dazu kommt, dass Solvent Naphtha-Mischungen abhängig von der Bezugsquelle und Lagerzeiten sich bei Einsatz in den Polyisocyanatzusammensetzungen deutlich unterschiedlich auf den Farbzahldrift auswirken können.

Als weitere lacktypische Additive (F) können beispielsweise verwendet werden: weitere Antioxidantien, UV-Stabilisatoren wie UV-Absorber und geeignete Radikalfängern (insbesondere HALS-Verbindungen, Hindered Amin Light Stabilizer), Aktivatoren (Beschleuniger), Trockenmittel, Füllmittel, Pigmente, Farbstoffe, antistatische Agenzien, Flammschutzmittel, Verdicker, thixotrope Agenzien, oberflächenaktive Agenzien, Viskositätsmodifikatoren, Plastifizierer oder Chelatbildner. Bevorzugt sind UV-Stabilisatoren.

Weitere primäre Antioxidanzien sind beispielsweise sekundäre Arylamine.

Die sekundären Antioxidantien sind bevorzugt ausgewählt aus der Gruppe bestehend aus Phosphiten, Phosphoniten, Phosphonaten und Thioethern.

Phosphite sind Verbindungen des Typs P(OR^{a})(OR^{b}) (OR^{c}) mit R^{a}, R^{b}, R^{c} als gleichen oder unterschiedlichen aliphatischen oder aromatischen Resten (die auch cyclische oder spiro-Strukturen aufbauen können).

Bevorzugte Phosphonite sind beschrieben in WO 2008/116894, dort besonders von Seite 11, Zeile 8 bis Seite 14, Zeile 8.

Bevorzugte Phosphonate sind beschrieben in WO 2008/116895, dort besonders von Seite 10, Zeile 38 bis Seite 12, Zeile 41.

Diese sind insbesondere Dialkylphosphonate und Dialkyldiphosphonate.

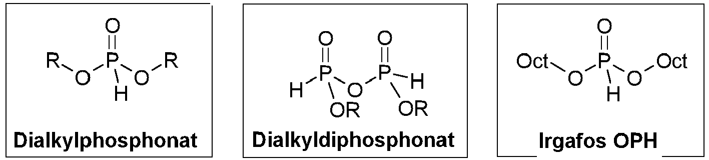

Beispiele dafür sind Mono- und Di-C₁- bis C₁₂-Alkylphosphonate und deren Gemischen, bevorzugt die Dialkylphosphonate, besonders bevorzugt solche mit C₁- bis C₈-Alkylgruppen, ganz besonders bevorzugt mit C₁- bis C₈-Alkylgruppen und insbesondere solche mit C₁-, C₂-, C₄- oder C₈-Alkylgruppen.

Die Alkylgruppen in Dialkylphosphonaten können dabei gleich oder verschieden sein, bevorzugt sind sie gleich.

Beispiele für C₁- bis C₁₂-Alkylgruppen sind Methyl, Ethyl, iso-Propyl, n-Propyl, n-Butyl, iso-Butyl, sek-Butyl, tert.-Butyl, n-Hexyl, n-Heptyl, n-Octyl, n-Decyl, n-Dodecyl, 2-Ethylhexyl und 2-Propylheptyl.

Bevorzugte Thioether sind beschrieben in WO 2008/116893, dort besonders von Seite 11, Zeile 1 bis Seite 15, Zeile 37.

Geeignete UV-Absorber umfassen Oxanilide, Triazine und Benzotriazole (letztere erhältlich z.B. als Tinuvin® -Marken der BASF SE) und Benzophenone (z.B. Chimassorb® 81 der BASF SE). Bevorzugt sind z.B. 95 % Benzolpropansäure, 3-(2H-Benzotriazol-2-yl)-5-(1,1-dimethylethyl)-4-hydroxy-, C7-9-verzweigte und lineare Alkylester; 5 % 1-Methoxy-2-propylacetat (z.B. Tinuvin® 384) und α-[3-[3-(2H-Benzotriazol-2-yl)-5-(1,1,-dimethylethyl)-4-hydroxyphenyl]-1-oxopropyl]-ω-hydroxypoly-(oxo-1,2-ethanediyl) (z.B. Tinuvin® 1130), jeweils Produkte z.B. der BASF SE. DL-Alpha-Tocopherol, Tocopherol, Zimtsäurederivate und Cyanoacrylate können ebenfalls zu diesem Zweck eingesetzt werden.

Diese können allein oder zusammen mit geeigneten Radikalfängern, beispielsweise sterisch gehinderten Aminen (oft auch als HALS -oder HAS-Verbindungen bezeichnet; Hindered Amine (Light) Stabilizer) wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat, eingesetzt werden. Diese sind z.B. erhältlich als Tinuvin®- und Chimassorb®-Marken der BASF SE. Bevorzugt im gemeinsamen Einsatz mit Lewis-Säuren sind jedoch solche gehinderten Amine, die N-alkyliert sind, beispielsweise Bis (1,2,2,6,6-pentamethyl-4-piperidinyl)-[[3,5-bis(1,1-dimethylethyl)-4-hydroxyphenyl]-methyl]butylmalonat (z.B. Tinuvin® 144 der BASF SE); eine Mischung aus Bis(1,2,2,6,6-Pentamethyl-4-Piperidinyl)sebacat und Methyl(1,2,2,6,6-Pentamethyl-4-Piperidinyl)sebacat (z.B. Tinuvin® 292 der BASF SE); oder die N-(O-alkyliert) sind, wie z.B. Dekandisäure-bis-(2,2,6,6-tetramethyl-1-(octyloxy)-4-piperidinyl)-ester, Reaktionsprodukte mit 1,1-Dimethylethylhydroperoxyd und Oktan (z.B. Tinuvin® 123 der BASF SE), und speziell dem HALS-Triazin "2-Aminoethanol, Reaktionsprodukte mit Cyclohexan and peroxidiertem N-butyl-2,2,6,6-tetramethyl-4-piperidinamine-2,4,6-trichloro-1,3,5-triazin Reaktionsprodukt" (z.B. Tinuvin® 152 der BASF SE).

UV-Stabilisatoren werden üblicherweise in Mengen von 0,1 bis 5,0 Gew.-%, bezogen auf die in der Zubereitung enthaltenen festen Komponenten, eingesetzt.

Als Verdicker kommen neben radikalisch (ko)polymerisierten (Ko)Polymeren, übliche organische und anorganische Verdicker wie Hydroxymethylcellulose oder Bentonit in Betracht.

Als Chelatbildner können z.B. Ethylendiaminessigsäure und deren Salze sowie β-Diketone verwendet werden.

Weiterhin können noch als Komponente (G) Füllstoffe, Farbstoffe und/oder Pigmente enthalten sein.

Pigmente im eigentlichen Sinne sind gemäß CD Römpp Chemie Lexikon - Version 1.0, Stuttgart/New York: Georg Thieme Verlag 1995 unter Verweis auf DIN 55943 partikelförmige "im Anwendungsmedium praktisch unlösliche, anorganische oder organische, bunte oder unbunte Farbmittel".

Praktisch unlöslich bedeutet dabei eine Löslichkeit bei 25 °C unter 1 g / 1000 g Anwendungsmedium, bevorzugt unter 0,5, besonders bevorzugt unter 0,25, ganz besonders bevorzugt unter 0,1 und insbesondere unter 0,05 g / 1000 g Anwendungsmedium.

Beispiele für Pigmente im eigentlichen Sinne umfassen beliebige Systeme von Absorptions- und/oder Effektpigmenten, bevorzugt Absorptionspigmente. Anzahl und Auswahl der Pigmentkomponenten sind dabei keinerlei Beschränkungen unterworfen. Sie können den jeweiligen Erfordernissen, beispielsweise dem gewünschten Farbeindruck, beliebig angepasst werden, beispielsweise wie in Schritt a) beschrieben. Beispielsweise können alle Pigmentkomponenten eines standardisierten Mischlacksystems zugrunde liegen.

Unter Effektpigmenten sind alle Pigmente zu verstehen, die einen plättchenförmigen Aufbau zeigen und einer Oberflächenbeschichtung spezielle dekorative Farbeffekte verleihen. Bei den Effektpigmenten handelt es sich beispielsweise um alle in der Fahrzeug- und Industrielackierung üblicherweise einsetzbaren effektgebenden Pigmente. Beispiele für derartige Effektpigmente sind reine Metallpigmente; wie z.B. Aluminium-, Eisen- oder Kupferpigmente; Interferenzpigmente, wie z.B. titandioxidbeschichteter Glimmer, eisenoxidbeschichteter Glimmer, mischoxidbeschichteter Glimmer (z.B. mit Titandioxid und Fe₂O₃ oder Titandioxid und Cr₂O₃), metalloxidbeschichtetes Aluminium, oder Flüssigkristallpigmente.

Bei den farbgebenden Absorptionspigmenten handelt es sich beispielsweise um übliche in der Lackindustrie einsetzbare organische oder anorganische Absorptionspigmente. Beispiele für organische Absorptionspigmente sind Azopigmente, Phthalocyanin-, Chinacridon- und Pyrrolopyrrolpigmente. Beispiele für anorganische Absorptionspigmente sind Eisenoxidpigmente, Titandioxid und Ruß.

Farbstoffe sind ebenfalls Farbmittel und unterscheiden sich von den Pigmenten durch ihre Löslichkeit im Anwendungsmedium, d.h. sie weisen bei 25 °C eine Löslichkeit über 1 g / 1000 g im Anwendungsmedium auf.

Beispiele für Farbstoffe sind Azo-, Azin-, Anthrachinon-, Acridin-, Cyanin-, Oxazin-, Polymethin-, Thiazin-, Triarylmethan-Farbstoffe. Diese Farbstoffe können Anwendung finden als basische oder kationische Farbstoffe, Beizen-, Direkt-, Dispersions-, Entwicklungs-, Küpen-, Metallkomplex-, Reaktiv-, Säure-, Schwefel-, Kupplungs- oder Substantive Farbstoffe.

Als koloristisch inerte Füllstoffe sind alle Stoffe/Verbindungen zu verstehen, die einerseits koloristisch unwirksam sind; d.h. die eine geringe Eigenabsorption zeigen und deren Brechzahl ähnlich der Brechzahl des Beschichtungsmediums ist, und die andererseits in der Lage sind, die Orientierung (parallele Ausrichtung) der Effektpigmente in der Oberflächenbeschichtung, d.h. im applizierten Lackfilm, zu beeinflussen, ferner Eigenschaften der Beschichtung oder der Beschichtungsmassen, beispielsweise Härte oder Rheologie. Im Folgenden sind beispielhaft einsetzbare inerte Stoffe/Verbindungen genannt, ohne jedoch den Begriff koloristisch inerte topologiebeeinflussende Füllstoffe auf diese Beispiele zu beschränken. Geeignete inerte Füllstoffe entsprechend der Definition können beispielsweise transparente oder semitransparente Füllstoffe oder Pigmente sein, wie z.B. Kieselgele, Blancfixe, Kieselgur, Talkum, Calciumcarbonate, Kaolin, Bariumsulfat, Magnesiumsilikat, Aluminiumsilikat, kristallines Siliziumdioxid, amorphe Kieselsäure, Aluminiumoxid, Mikrokugeln oder Mikrohohlkugeln z.B. aus Glas, Keramik oder Polymeren mit Größen von beispielsweise 0,1-50 µm. Weiterhin können als inerte Füllstoffe beliebige feste inerte organische Partikel, wie z.B. Harnstoff-Formaldehyd-Kondensationsprodukte, mikronisiertes Polyolefinwachs und mikronisiertes Amidwachs, eingesetzt werden. Die inerten Füllstoffe können jeweils auch in Mischung eingesetzt werden. Bevorzugt wird jedoch jeweils nur ein Füllstoff eingesetzt.

Bevorzugte Füllstoffe umfassen Silikate, z. B. durch Hydrolyse von Siliciumtetrachlorid erhältliche Silikate wie Aerosil® der Fa. Degussa, Kieselerde, Talkum, Aluminiumsilikate, Magnesiumsilikate, Calciumcarbonate etc.

In einer bevorzugten Form werden Polyisocyanate (A) in Abmischung mit Lewis-Säure (B), Brønsted-Säure (C), sterisch gehindertem Phenol (D), ggf. Lösungsmittel(n) (E), ggf. Additiven (F) in einem ersten Schritt zur weiteren Verarbeitung zur Verfügung gestellt. Diese Gemische werden dann in einem zweiten Schritt durch Zufügen von gegebenenfalls weiteren der Komponenten (B) bis (F), in die erfindungsgemäßen Polyisocyanatzusammensetzungen überführt.

In einer anderen Form der Erfindung werden die Komponenten A bis E, gegebenenfalls F und G direkt zusammengegeben.

Bevorzugte Lösungsmittel für Vormischungen dieses ersten Schritts sind n-Butylacetat, Ethylacetat, 1-Methoxypropylacetat-2,2-Methoxyethylacetat, sowie deren Gemische, insbesondere mit den oben aufgeführten aromatischen Kohlenwasserstoffgemischen.

Derartige Gemische können im Volumenverhältnis 5:1 bis 1:5 erstellt werden, bevorzugt im Volumenverhältnis 4:1 bis 1:4, besonders bevorzugt im Volumenverhältnis 3:1 bis 1:3 und ganz besonders bevorzugt im Volumenverhältnis 2:1 bis 1:2.

Bevorzugte Beispiele sind Butylacetat/Xylol, Methoxypropylacetat/Xylol 1:1, Butylacetat/Solventnaphtha 100 1:1, Butylacetat/Solvesso® 100 1:2 und Kristallöl 30/Shellsol® A 3:1.

Die erfindungsgemäßen Polyisocyanatzusammensetzungen sind beispielsweise wie folgt zusammengesetzt:
A) 20 bis 99,998 Gew%, bevorzugt 30 bis 90 Gew%, besonders bevorzugt 40-80 Gew%,
(B) 10 bis 10000 Gew.ppm, bevorzugt 20 bis 2000 und besonders bevorzugt 50 bis 1000 Gew.ppm,
(C) 2 bis 1000 Gew.ppm, bevorzugt 5 bis 300, besonders bevorzugt 10 bis 50 Gew.ppm,
(D) 20 bis 2000 Gew.ppm, bevorzugt 50 bis 600, besonders bevorzugt 100 bis 200 Gew.ppm, und
(E) 0 bis 80, bevorzugt 10-70 %, besonders bevorzugt 20 bis 60 Gew%,
(F) 0-5 % Additive
   mit der Maßgabe, dass die Summe immer 100 Gew% beträgt.
(G) ggf. zusätzlich zu den obigen Komponenten (A) bis (F) noch Pigmente.

Sind Komponenten (G) anwesend, so werden diese nicht in die Zusammensetzung der Komponenten (A) bis (F) eingerechnet.

Die erfindungsgemäßen Polyisocyanatzusammensetzungen können mit Vorteil als Härterkomponenten zusätzlich zu mindestens einem Bindemittel in Polyurethanlacken eingesetzt werden. Die Umsetzung mit Bindemitteln kann dabei gegebenenfalls nach einen langen Zeitraum erfolgen, der eine entsprechende Lagerung der Polyisocyanatzusammensetzung erfordert. Die Lagerung von Polyisocyanatzusammensetzung erfolgt zwar bevorzugter weise bei Raumtemperatur, kann aber auch bei höheren Temperaturen erfolgen. In der Praxis sind Erwärmung solcher Polyisocyanatzusammensetzung auf 40 °C, 60 °C, selbst bis 80 °C durchaus möglich.

Bei den Bindemitteln kann es sich beispielsweise um Polyacrylatpolyole, Polyesterpolyole, Polyetherpolyole, Polyurethanpolyole; Polyharnstoffpolyole; Polyesterpolyacrylatpolyole; Polyesterpolyurethanpolyole; Polyurethanpolyacrylatpolyole, Polyurethanmodifizierte Alkydharze; Fettsäuremodifizierte Polyesterpolyurethanpolyole, Kopolymerisate mit Allylethern, Propfpolymerisate aus den genannten Stoffgruppen mit z.B. unterschiedlichen Glasübergangstemperaturen, sowie Mischungen der genannten Bindemittel handeln. Bevorzugt sind Polyacrylatpolyole, Polyesterpolyole und Polyurethanpolyole.

Bevorzugte OH-Zahlen, gemessen gemäß DIN 53240-2 (potentiometrisch), sind 40-350 mg KOH/g Festharz für Polyester, bevorzugt 80-180 mg KOH/g Festharz, und 15-250 mg KOH/g Festharz für Polyacrylatole, bevorzugt 80-160 mg KOH/g.

Zusätzlich können die Bindemittel eine Säurezahl gemäß DIN EN ISO 3682 (potentiometrisch) bis 200 mg KOH/g, bevorzugt bis 150 und besonders bevorzugt bis 100 mg KOH/g aufweisen.

Besonders bevorzugte Bindemittel sind Polyacrylatpolyole und Polyesterole.

Polyacrylatpolyole weisen bevorzugt ein Molekulargewicht Mₙ von mindestens 500, besonders bevorzugt mindestens 1200 g/mol auf. Das Molekulargewicht Mₙ kann prinzipiell nach oben unbegrenzt sein, bevorzugt bis zu 50.000, besonders bevorzugt bis zu 20.000 g/mol, ganz besonders bevorzugt bis zu 10.000 g/mol und insbesondere bis zu 5.000 g/mol betragen.

Die hydroxyfunktionellen Monomere (siehe unten) werden in solchen Mengen bei der Kopolymerisation mit verwendet, dass die obengenannten Hydroxylzahlen der Polymere resultieren, die im allgemeinen einem Hydroxygruppengehalt der Polymere von 0,5 bis 8, vorzugsweise 1 bis 5 Gew.-% entsprechen.

Dabei handelt es sich um hydroxygruppenhaltige Kopolymere aus mindestens einem hydroxygruppenhaltigen (Meth)acrylat mit mindestens einem weiteren polymerisationsfähigen Komonomer ausgewählt aus der Gruppe bestehend aus (Meth)acrylsäurealkylestern, Vinylaromaten, a, β-ungesättigten Carbonsäuren und anderen Monomeren.

Als (Meth)acrylsäurealkylestern genannt seien z.B. C₁-C₂₀-Alkyl(meth)acrylate, Vinylaromaten sind solche mit bis zu 20 C-Atomen, α,β-ungesättigte Carbonsäuren umfassen auch deren Anhydride und andere Monomere sind beispielsweise Vinylester von bis zu 20 C-Atomen enthaltenden Carbonsäuren, ethylenisch ungesättigte Nitrile, Vinylether von 1 bis 10 C-Atome enthaltenden Alkoholen und, weniger bevorzugt, aliphatische Kohlenwasserstoffe mit 2 bis 8 C-Atomen und 1 oder 2 Doppelbindungen.

Als (Meth)acrylsäurealkylester bevorzugt sind solche mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, Vinylstearat, Vinylpropionat und Vinylacetat.

α, β-Ungesättigte Carbonsäuren und deren Anhydride können beispielsweise sein Acrylsäure, Methacrylsäure, Fumarsäure, Crotonsäure, Itaconsäure, Maleinsäure oder Maleinsäureanhydrid, bevorzugt Acrylsäure.

Als hydroxyfunktionelle Monomere seien Monoester von α,β-ungesättigten Carbonsäuren, wie Acrylsäure, Methacrylsäure (in dieser Schrift kurz als "(Meth)acrylsäure" bezeichnet), mit Di- oder Polyolen erwähnt, die vorzugsweise 2 bis 20 C-Atome und wenigstens zwei Hydroxygruppen aufweisen, wie Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,4-Butandiol, 1,5-Pentandiol, Neopentylglykol, Hydroxypivalinsäureneopentylglykolester, 2-Ethyl-1,3-Propandiol, 2-Methyl-1,3-Propandiol, 2-Butyl-2-ethyl-1,3-Propandiol, 1,6-Hexandiol, 2-Methyl-1,5-pentandiol, 2-Ethyl-1,4-butandiol, 2-Ethyl-1,3-Hexandiol, 2,4-Diethyl-oktan-1,3-diol, 2,2-Bis(4-hydroxycyclohexyl)propan, 1,1-, 1,2-, 1,3- und 1,4-Bis(hydroxymethyl)-cyclohexan, 1,2-, 1,3- oder 1,4-Cyclohexandiol, Glycerin, Trimethylolethan, Trimethylolpropan, Trimethylolbutan, Pentaerythrit, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit, Isomalt, Poly-THF mit einem Molekulargewicht zwischen 162 und 4500, bevorzugt 250 bis 2000, Poly-1,3-propandiol oder Polypropylenglykol mit einem Molekulargewicht zwischen 134 und 2000 oder Polyethylenglykol mit einem Molekulargewicht zwischen 238 und 2000 sein.

Bevorzugt sind 2-Hydroxyethylacrylat, 2-Hydroxyethylmethacrylat, 2- oder 3-Hydroxypropylacrylat, 1,4-Butandiolmonoacrylat oder 3-(Acryloyloxy)-2-hydroxypropylacrylat und besonders bevorzugt 2-Hydroxyethylacrylat und/oder 2-Hydroxyethylmethacrylat.

Als vinylaromatische Verbindungen kommen z.B. Vinyltoluol, α-Butylstyrol, α-Methylstyrol, 4-n-Butylstyrol, 4-n-Decylstyrol und vorzugsweise Styrol in Betracht.

Beispiele für Nitrile sind Acrylnitril und Methacrylnitril.

Geeignete Vinylether sind z.B. Vinylmethylether, Vinylisobutylether, Vinylhexylether und Vinyloctylether.

Als nicht aromatische Kohlenwasserstoffe mit 2 bis 8 C-Atomen und einer oder zwei olefinischen Doppelbindungen seien Butadien, Isopren, sowie Ethylen, Propylen und Isobutylen genannt.

Weiterhin sind N-Vinylformamid, N-Vinylpyrrolidon sowie N-Vinylcaprolactam einsetzbar, weiterhin, ethylenisch ungesättigte Säuren, insbesondere Carbonsäuren, Säureanhydride oder Säureamide, sowie Vinylimidazol. Auch Epoxidgruppen aufweisende Komonomere wie z.B. Glycidylacrylat oder -methacrylat oder Monomere wie N-Methoxymethylacrylamid oder -methacrylamid können in geringen Mengen mit verwendet werden.

Bevorzugt sind Ester der Acrylsäure bzw. der Methacrylsäure mit 1 bis 18, vorzugsweise 1 bis 8 Kohlenstoffatomen im Alkoholrest wie z.B. Methylacrylat. Ethylacrylat, Iso-propylacrylat, n-Propylacrylat, n-Butylacrylat, 2-Ethylhexylacrylat, n-Stearylacrylat, die diesen Acrylaten entsprechenden Methacrylate, Styrol, alkylsubstituierte Styrole, Acrylnitril, Methacrylnitril, Vinylacetat oder Vinylstearat bzw. beliebige Gemische derartiger Monomere.

Die Hydroxygruppen tragenden Monomere werden in die Kopolymerisation der Hydroxygruppen tragenden (Meth)Acrylate im Gemisch mit anderen polymerisierbaren, bevorzugt radikalisch polymerisierbaren Monomeren, eingesetzt, bevorzugt solche, welche zu mehr als 50 Gew% aus C₁-C₂₀-, bevorzugt C₁- bis C₄-Alkyl(meth)acrylat, (Meth)acrylsäure, Vinylaromaten mit bis zu 20 C-Atomen, Vinylestern von bis zu 20 C-Atomen enthaltenden Carbonsäuren, Vinylhalogeniden, nicht aromatischen Kohlenwasserstoffen mit 4 bis 8 C-Atomen und 1 oder 2 Doppelbindungen, ungesättigten Nitrilen und deren Mischungen bestehen. Besonders bevorzugt sind die Polymere, die neben den Hydroxygruppen tragenden Monomeren zu mehr als 60 Gew% aus C₁-C₁₀-Alkyl(meth)acrylaten, Styrol und dessen Derivaten oder deren Mischungen bestehen.

Die Herstellung der Polymerisate kann durch Polymerisation nach üblichen Verfahren durchgeführt werden. Vorzugsweise erfolgt die Herstellung der Polymerisate in einer Emulsionspolymerisation oder in organischer Lösung. Möglich sind kontinuierliche oder diskontinuierliche Polymerisationsverfahren. Von den diskontinuierlichen Verfahren sind das Batch- und das Zulaufverfahren zu nennen, wobei letzteres bevorzugt ist. Bei dem Zulaufverfahren wird das Lösungsmittel allein oder mit einem Teil des Monomergemisches vorgelegt, auf die Polymerisationstemperatur erwärmt, die Polymerisation im Fall einer Monomervorlage radikalisch gestartet und das restliche Monomergemisch zusammen mit einem Initiatorgemisch im Verlauf von 1 bis 10 Stunden, vorzugsweise 3 bis 6 Stunden, zudosiert. Optional wird anschließend noch nachaktiviert, um die Polymerisation bis zu einem Umsatz von mindestens 99 % durchzuführen.

Weitere Bindemittel sind z.B. Polyesterpolyole, wie sie durch Kondensation von Polycarbonsäuren, insbesondere Dicarbonsäuren mit Polyolen, insbesondere Diolen erhältlich sind. Um eine für die Polymerisation angemessene Funktionalität des Polyesterpolyols zu gewährleisten werden partiell auch Triole, Tetrole etc. wie auch Trisäuren, etc. eingesetzt.

Polyesterpolyole, sind z.B. aus Ullmanns Enzyklopädie der technischen Chemie, 4. Auflage, Band 19, S. 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, aromatisch oder heterocyclisch sein und optional, z.B. durch Halogenatome, substituiert und/oder ungesättigt sein. Als Beispiele hierfür seien genannt:
Oxalsäure, Maleinsäure, Fumarsäure, Bernsteinsäure, Glutarsäure, Adipinsäure, Sebacinsäure, Dodekandisäure, o-Phthalsäure, Isophthalsäure, Terephthalsäure, Trimellithsäure, Azelainsäure, 1,4-Cyclohexandicarbonsäure oder Tetrahydrophthalsäure, Korksäure, Azelainsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäureanhydrid, dimere Fettsäuren, deren Isomere und Hydrierungsprodukte sowie veresterbare Derivate, wie Anhydride oder Dialkylester, beispielsweise C₁-C₄-Alkylester, bevorzugt Methyl-, Ethyl- oder n-Butylester, der genannten Säuren eingesetzt werden. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, besonders bevorzugt Bernsteinsäure, Adipinsäure, Sebacinsäure und Dodecandicarbonsäure.

Als mehrwertige Alkohole kommen zur Herstellung der Polyesterole in Betracht 1,2-Propandiol, Ethylenglykol, 2,2-Dimethyl-1,2-Ethandiol, 1,3-Propandiol, 1,2-Butandiol, 1,3-Butandiol, 1,4-Butandiol, 3-Methylpentan-1,5-diol, 2-Ethylhexan-1,3-diol, 2,4-Diethyloctan-1,3-diol, 1,6-Hexandiol, Poly-THF mit einer Molmasse zwischen 162 und 4500, bevorzugt 250 bis 2000, Poly-1,3-propandiol mit einer Molmasse zwischen 134 und 1178, Poly-1,2-propandiol mit einer Molmasse zwischen 134 und 898, Polyethylenglykol mit einer Molmasse zwischen 106 und 458, Neopentylglykol, Hydroxypivalinsäureneopentylglykolester, 2-Ethyl-1,3-Propandiol, 2-Methyl-1,3-Propandiol, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, Trimethylolbutan, Trimethylolpropan, Trimethylolethan, Neopentylglykol, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomalt, die optional wie oben beschrieben alkoxiliert sein können.

Bevorzugt sind Alkohole der allgemeinen Formel HO-(CH₂)ₓ-OH, wobei x eine Zahl von 1 bis 20, bevorzugt eine gerade Zahl von 2 bis 20 ist. Bevorzugt sind Ethylenglykol, Butan-1,4-diol, Hexan-1,6-diol, Octan-1,8-diol und Dodecan-1,12-diol. Weiterhin bevorzugt ist Neopentylglykol. Ferner kommen auch Polycarbonat-Diole in Betracht, wie sie z.B. durch Umsetzung von Phosgen mit einem Überschuss von den als Aufbaukomponenten für die Polyesterpolyole genannten niedermolekularen Alkohole erhalten werden können.

Geeignet sind auch Polyesterdiole auf Lacton-Basis, wobei es sich um Homo- oder Mischpolymerisate von Lactonen, bevorzugt um endständige Hydroxygruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, gamma-Butyrolacton und/oder Methyl-ε-caprolacton, 4-Hydroxybenzoesäure, 6-Hydroxy-2-naphthalinsäure oder Pivalolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

In Polyurethanlacken sind Molmassen Mₙ der Polyester von 800 - 4000 g/mol üblich, wobei die hier verwendeten Polyester nicht darauf beschränkt sind.

Weiterhin sind als Bindemittel auch Polyetherole geeignet, die durch Addition von Ethylenoxid, Propylenoxid und/oder Butylenoxid, bevorzugt Ethylenoxid und/oder Propylenoxid und besonders bevorzugt Ethylenoxid an H-aktive Komponenten hergestellt werden. Ebenso sind Polykondensate aus Butandiol geeignet. In Polyurethanlacken sind Molmassen der Polyether von 500-2000 g/mol üblich, wobei die hier verwendeten Polyether nicht darauf beschränkt sind.

Die Polymeren können zumindest teilweise durch sogenannte Reaktivverdünner ersetzt werden. Dabei kann es sich um blockierte sekundäre oder primäre Amine (Aldimine und Ketime) oder um Verbindungen mit sterisch gehinderten und / oder elektronenarmen sekundären Aminogruppen handeln, beispielsweise Asparaginsäureester gemäß EP 403921 oder WO 2007/39133.

Zur Härtung des Films werden Polyisocyanatzusammensetzung und Bindemittel in einem Molverhältnis von Isocyanatgruppen zu gegenüber Isocyanat reaktiven Gruppen von 0,2:1 bis 5:1, bevorzugt 0,8:1 bis 1,2:1 und speziell 0,9:1 bis 1,1:1 miteinander vermischt, wobei gegebenenfalls noch weitere lacktypische Bestandteile eingemischt werden können, und auf das Substrat aufgetragen und bei Umgebungstemperatur bis 150 °C ausgehärtet.

In einer bevorzugten Variante wird das Lackgemisch bei Umgebungstemperatur bis 80 °C, besonders bevorzugt bis 60 °C ausgehärtet (z.B. für refinish-Anwendungen oder große Objekte, die sich schlecht in einen Ofen stellen lassen).

In einer anderen bevorzugten Anwendung wird das Lackgemisch bei 110-150 °C, bevorzugt bei 120-140 °C ausgehärtet (z.B. für OEM-Anwendungen).

Unter "Härtung" wird im Rahmen der vorliegenden Erfindung das Erzeugen einer klebfreien Beschichtung auf einem Substrat verstanden, indem man die auf das Substrat aufgetragene Beschichtungsmasse zumindest solange auf die oben angegebene Temperatur erwärmt, bis mindestens die gewünschte Klebfreiheit eingetreten ist.

Unter einer Beschichtungsmasse wird im Rahmen der vorliegenden Schrift eine Mischung zumindest der Komponenten verstanden, die zum Beschichten mindestens eines Substrats zum Zwecke einer Ausbildung eines Films und, nach Härtung, einer klebfreien Beschichtung vorgesehen ist.

Die Beschichtung der Substrate erfolgt nach üblichen, dem Fachmann bekannten Verfahren, wobei man wenigstens eine Beschichtungsmasse auf das zu beschichtende Substrat in der gewünschten Stärke aufbringt und die optional enthaltenen flüchtigen Bestandteile der Beschichtungsmasse, optional unter Erhitzen, entfernt. Dieser Vorgang kann gewünschten falls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Koextrudieren erfolgen.

Die Dicke einer solchen zu härtenden Schicht kann von 0,1 µm bis mehrere mm betragen, bevorzugt von 1 bis 2.000 µm, besonders bevorzugt 5 bis 200 µm, ganz besonders bevorzugt von 5 bis 60 µm (bezogen auf den Lack im Zustand in dem das Lösungsmittel aus dem Lack entfernt ist).

Weiterhin sind auch Substrate, beschichtet mit einer erfindungsgemäßen Mehrschichtlackierung Gegenstand der vorliegenden Erfindung.

Besonders geeignet sind solche Polyurethanlacke für Anwendungen, in denen eine besonders hohe Applikationssicherheit, Außenwitterungsbeständigkeit, Optik, Lösemittel-, Chemikalien- und Wasserfestigkeit gefordert werden.

Die erhaltenen zweikomponentigen Beschichtungsmassen und Lackformulierungen eignen sich zum Beschichten von Substraten wie Holz, Holzfurnier, Papier, Pappe, Karton, Textil, Folie, Leder, Vlies, Kunststoffoberflächen, Glas, Keramik, mineralischen Baustoffen, wie Zement-Formsteine und Faserzementplatten oder Metallen, die jeweils optional vorbeschichtet bzw. vorbehandelt sein können.

Derartige Beschichtungsmassen eignen sich als oder in Innen- oder Außenbeschichtungen, also solche Anwendungen, die dem Tageslicht ausgesetzt sind, bevorzugt von Gebäudeteilen, Beschichtungen auf (Groß-)Fahrzeugen und Flugzeugen und industriellen Anwendungen, Nutzfahrzeuge im landwirtschaftlichen und Baubereich, Dekolackierungen, Brücken, Gebäuden, Strommasten, Tanks, Containern, Pipelines, Kraftwerken, chemischen Anlagen, Schiffen, Kränen, Pfählen, Spundwänden, Armaturen, Rohren, Fittings, Flanschen, Kupplungen, Hallen, Dächern und Baustahl, Möbeln, Fenstern, Türen, Parkett, Can-Coating und Coil-Coating, für Bodenbeläge, wie bei Parkdecks oder in Krankenhäusern in Automobillacken als OEM und refinish-Anwendung.

Bevorzugt werden derartige Beschichtungsmassen bei Temperaturen zwischen Umgebungstemperatur bis 80 °C, bevorzugt bis 60 °C, besonders bevorzugt bis 40 °C eingesetzt. Bevorzugt handelt es sich dabei um solche Gegenstände, die nicht bei hohen Temperaturen gehärtet werden können, wie große Maschinen, Flugzeuge, Großraumfahrzeuge und refinish-Anwendungen.

Insbesondere werden die erfindungsgemäßen Beschichtungsmassen als Klar-, Basis- und Decklacke(n), Primern und Füllern eingesetzt.

Es stellt einen Vorteil der erfindungsgemäßen Polyisocyanatzusammensetzungen dar, dass sie Polyisocyanatmischungen in Gegenwart von Urethanisierungskatalysatoren über einen langen Zeitraum farbstabil halten.

Derartige Polyisocyanatzusammensetzungen können als Härter in Lacken, Klebstoffen und Dichtungsmassen eingesetzt werden.

Durch ihre niedrige Farbzahl und hohe Farbstabilität sind sie insbesondere für Beschichtungsmassen für Klarlacke interessant. Insbesondere sind refinish-Anwendungen bevorzugt.

### Beispiele

### Einsatzstoffe:

**Polyisocyanate A**: Isocyanurat auf Basis Hexamethylendiisocyanat

Polyisocyanat **A1**, Polyisocyanurat: Hexamethylendiisocyanat HDI wurde in Anwesenheit von 32 ppm Benzyltrimethylammonium-hydroxyisobuttersäure als Katalysator bezogen auf Hexamethylendiisocyanat, 5%-ig in Ethylhexanol in einer mehrstufigen Reaktorkaskade mit 20 min mittlerer Durchsatzzeit pro Reaktor bei 120 °C umgesetzt. Die Reaktion wurde chemisch mit 12 ppm Di-(2-ethyl-hexyl)-phosphat bezogen auf Hexamethylendiisocyanat, 10%-ig gelöst in Methylglykol, gestoppt. Hexamethylendiisocyanat wurde im Vakuum abdestilliert. Zugabe von 300 ppm Methoxyessigsäure und 100 ppm BHT **D1**. NCO-Gehalt des Produkts: 22,2 %, Farbzahl 21: Hz; Viskosität: 2620 mPa*s.

Polyisocyanat **A2**, Polyisocyanurat: Versuch mit Hexamethylendiisocyanat, 37 ppm Benzyltrimethylammonium-hydroxyisobuttersäure als Katalysator bezogen auf Hexamethylendiisocyanat, gelöst in Ethylhexanol, mehrstufige Reaktorkaskade mit 20 min mittlerer Durchsatzzeit pro Reaktor bei 120 °C, und thermischer Stoppung. Abdestillation von HDI im Vakuum. NCO-Gehalt des Produkts: 22,4 %; Farbzahl: 37 Hz; Viskosität: 2339 mPa*s. Zugabe von 100 ppm Irganox 1135.

Polyisocyanat **A3**, Polyisocyanurat: Versuch mit Hexamethylendiisocyanat, 39 ppm Benzyltrimethylammonium-hydroxyisobuttersäure als Katalysator bezogen auf Hexamethylendiisocyanat, in Ethylhexanol. Reaktorkaskade mit 20 min mittlerer Durchsatzzeit pro Reaktor bei 120 °C, chemisch mit 15 ppm Di-(2-ethyl-hexyl)-phosphat bezogen auf Hexamethylendiisocyanat, 10%-ig in Ethylhexanol gestoppt. Abdestillation von HDI im Vakuum. Stabilisiert mit 300 ppm Methoxyessigsäure, 100 ppm BHT. NCO-Gehalt des Produkts: 21,9 %; Farbzahl: 35 Hz; Viskosität: 3300 mPa*s.

Polyisocyanat **A4**, Polyisocyanurat: Wie Polyisocyanat **A1**, jedoch ohne BHT **D1**, mit einem NCO-Gehalt von 20,8 %; Farbzahl: 21 Hz; Viskosität: 2400 mPa*s.

Polyisocyanat A5, Polyisocyanurat: Hexamethylendiisocyanat wurde in Anwesenheit von 49 ppm Benzyltrimethylammonium-hydroxyisobuttersäure als Katalysator bezogen auf Hexamethylendiisocyanat, in Ethylhexanol, in einer Reaktorkaskade mit 10 min mittlerer Verweilzeit pro Reaktor bei 120 °C umgesetzt, chemisch mit 31 ppm Di-(2-ethyl-hexyl)-phosphat bezogen auf Hexamethylendiisocyanat, 10%-ig in Methylglycol, gestoppt. Abdestillation von HDI im Vakuum. Zugabe von 300 ppm Methoxyessigsäure und 100 ppm BHT D1. NCO-Gehalt des Produkts: 22,2 %; Farbzahl: 19 Hz; Viskosität: 2730 mPa*s.

Polyisocyanat **A6**: Polyisocyanurat hergestellt mit DABCO TMR (Trimethyl-hydroxypropylammonium-ethyhexanoat, Air Products) als Katalysator und thermischer Stoppung der Isocyanuratisierungsreaktion bei ca. 140 °C. NCO-Gehalt des Produkts: 22,1 %; Farbzahl 15 Hz; Viskosität: 3960 mPa*s.

### Katalysatoren B

Katalysator **B1**: Dibutylzinndilaurat (DBTL, DBTDL)

### Brønsted-Säuren C

Brønsted-Säure **C1**: Di-(2-ethylhexyl)-phosphat (DEHP, Fa. Lanxess)
Brønsted-Säure **C2**: Dodecylphenolsulfonsäure (Nacure® 5076, King Industries)
Brønsted-Säure **C3**: Dioctylphosphinsäure (Irgafos® OPH, BASF SE).

### Sterisch gehinderte Phenole D

Phenol **D1**:2,6-Di-tert-butyl-4-methyl-phenol (BHT)
Phenol **D2**: Isooctyl-3-(3,5-di-tert-butyl-4-hydroxyphenyl)-propionat (Irganox® 1135 der BASF SE)

### Lösungsmittel E

Lösungsmittel **E1**: Solvent Naphtha (Siedebereich ca. 170-180 °C)

Die Polyisocyanate **A** wurden in ca. 50 Gew.-% mit den in den Versuchen angegebenen Konzentrationen von Lewis-Säure-Katalysatoren (**B**), Brønsted-Säure (**C**), Phenolen (**D**), ca. 50 Gew.-% in Lösungsmittel (**E**) in fest verschlossenen Schraubdeckgefäßen zum Ausschluss von Luft unter Stickstoff gelagert. Spuren von Luft sind nicht ausgeschlossen.

Die Gew.-%-Angaben beziehen sich auf 100 % Gesamtgewicht bezogen auf Polyisocyanat A und Lösungsmittel E. Die Konzentrationen der Verbindungen (**B**), (**C**), (**D**) in ppm beziehen sich im jeweils unverdünnten Zustand der Verbindungen (**B**) bis (**D**) auf die Gesamtmenge Polyisocyanat (**A**).

Die Lagerung erfolgt bei 50 °C im Umluftofen. Die Farbzahlen werden direkt (unmittelbar vor Beginn der Lagerung), und nach Lagerung über unterschiedliche Zeiträume gemessen.

Die Farbzahlmessung erfolgt in APHA nach DIN EN 1557 auf einem Lico 150 der Firma Lange in einer 5 cm Messkuvette mit einem Volumen von 5 mL. Die Fehlertoleranzen betragen für den Sollwert 20 Hz (+/- 5, Ist-Wert 18 Hz); Sollwert 102 Hz (+/- 10, Ist-Wert 99 Hz); Sollwert 202 Hz (+/- 20, Ist-Wert 197 Hz).

Jede Messung wurde unmittelbar gegen ein Referenzbeispiel (Ref.) verglichen, das stabilisatorfrei war.

**Tabelle 1: Lagerung von Polyisocyanat A1 (50%), Solvesso 100 E, 1000 ppm Katalysator B1 (DBTL) und weiteren Komponenten gemäß folgender Tabelle bei 50 °C**

| Nr. | PI | Säure | Phenol | C3 | 0 | 7 | 28 | 70 |
|---|---|---|---|---|---|---|---|---|
| | | ppm | ppm | ppm | Tage | | | |
| Vgl. 1 | A1 | | 100 D1 | | 10 | 16 | 59 | 137 |
| Bsp. 1 | A1 | 40 C1 | 100 D1 | | 10 | 16 | 22 | 113 |
| Bsp. 2 | A1 | 10 C2 | 100 D1 | | 8 | 16 | 25 | 54 |
| Bsp. 3 | A1 | 10 C2 | 100 D1 | 300 | 8 | 11 | 18 | 19 |
| Vgl. 2 | A4 | | | | 11 | 51 | 80 | 194 |
| Vgl. 3 | A1 | | 100 D1 | | 10 | 16 | 59 | 137 |
| Vgl. 4 | A4 | 40 C1 | | | 9 | 64 | 109 | 187 |
| Bsp. 4 | A4 | 40 C1 | 100 D1 | | 9 | 15 | 22 | 68 |
| Vgl. 5 | A1 | | 100 D2 | | 10 | 19 | 63 | 141 |
| Bsp. 5 | A1 | 40 C1 | 100 D2 | | 10 | 18 | 27 | 99 |
| Vgl. 6 | A2 | | 100 D2 | | 17 | 52 | 61 | 113 |
| Vgl. 7 | A2 | | 100 D2 | | 16 | 39 | 52 | 80 |
| | | | 300 D1 | | | | | |
| Bsp. 6 | A2 | 50 C1 | 100 D2 | | 16 | 11 | 18 | 62 |
| Bsp. 7 | A2 | 50 C1 | 100 D2 | | 16 | 13 | 19 | 58 |
| | | | 300 D1 | | | | | |
| Vgl. 8 | A3 | | 100 D1 | 300 | 20 | 19 | 57 | 94 |
| Bsp. 8 | A3 | 20 C1 | 100 D1 | 300 | 19 | 18 | 16 | 74 |
| Bsp. 9 | A3 | 40 C1 | 100 D1 | 300 | 19 | 17 | 17 | 59 |
| Vgl. 9 | A5 | | 100 D1 | | 11 | 21 | 76 | 175 |
| Bsp. 10 | A5 | 40 C1 | 100 D1 | | 11 | 21 | 26 | 127 |
| Vgl. 10 | A6 | | | | 11 | 91 | 70 | 117 |
| Vgl. 11 | A6 | 40 C1 | | | 10 | 134 | 176 | 180 |
| Vgl. 12 | A6 | | 100 D1 | | 10 | 36 | 49 | 81 |
| Bsp. 11 | A6 | 40 C1 | 100 D1 | | 10 | 24 | 48 | 65 |

## Patentansprüche

1. Polyisocyanatzusammensetzungen, enthaltend
- (A) mindestens ein Polyisocyanat, erhältlich durch Umsetzung mindestens eines monomeren Isocyanats,
- (B) mindestens eine Lewis-saure organische Metallverbindung, die die Umsetzung von Isocyanatgruppen mit gegenüber Isocyanat reaktiven Gruppen zu beschleunigen vermag,
- (C) mindestens eine Brønsted-Säure mit einem pKs-Wert kleiner 4, ausgewählt aus der Gruppe bestehend aus C1) Dialkylphosphaten, C2) Arylsulfonsäuren und C3) Phosphonsäuredioctylester,
- (D) mindestens ein sterisch gehindertes Phenol.

2. Polyisocyanatzusammensetzungen gemäß Anspruch 1, die zusätzlich ein Lösungsmittel oder Lösungsmittelgemisch (E) enthalten.

3. Polyisocyanatzusammensetzungen gemäß Anspruch 1 oder 2, die zusätzlich andere lacktypische Additive (F) enthalten.

4. Polyisocyanatzusammensetzungen gemäß einem der vorhergehenden Ansprüche, **dadurch gekennzeichnet, dass** es sich bei dem monomeren Isocyanat um ein Diisocyanat handelt, ausgewählt aus der Gruppe bestehend aus 1,6-Hexamethylendiisocyanat, Isophorondiisocyanat, 1,3-Bis(iso-cyanatomethyl)cyclo-hexan, 4,4'-Di(isocyanatocyclohexyl)methan und 2,4'-Di(isocy-anatocyclohexyl)methan.

5. Polyisocyanatzusammensetzungen gemäß einem der vorhergehenden Ansprüche, **dadurch gekennzeichnet, dass** das Polyisocyanat (A) Isocyanurat-, Biuret-, Urethan- und/oder Allophanatgruppen und/oder Iminooxadiazindiongruppen aufweist.

6. Polyisocyanatzusammensetzungen gemäß einem der vorhergehenden Ansprüche, **dadurch gekennzeichnet, dass** das Polyisocyanat (A) Isocyanurat-, Urethan- und/oder Allophanatgruppen enthält, die unter Verwendung eines Ammoniumcarboxylat- oder Ammonium α-hydroxycarboxylat-Katalysators hergestellt wurden.

7. Polyisocyanatzusammensetzungen gemäß einem der vorhergehenden Ansprüche, **dadurch gekennzeichnet, dass** es sich bei dem Polyisocyanat um ein Isocyanuratgruppen enthaltendes Polyisocyanat, mit einer Viskosität von 600-4000 mPa*s, und/oder ein niederviskoses Urethan und/oder Allophanat mit einer Viskosität von 150-1600 mPa*s handelt.

8. Polyisocyanatzusammensetzungen gemäß Anspruch 1, **dadurch gekennzeichnet, dass** die Lewis-saure organische Metallverbindung (B) ein Metall enthält, ausgewählt aus der Gruppe bestehend aus Zinn, Zink, Titan, Zirkon, und Wismut, oder Mischungen solcher Verbindungen.

9. Polyisocyanatzusammensetzungen gemäß Anspruch 1, **dadurch gekennzeichnet, dass** Verbindung (D) pro aromatischem Ring genau eine phenolische Hydroxygruppe aufweist und in der mindestens eine ortho-Position bezogen auf die phenolische Hydroxygruppe eine gegebenenfalls substituierte tert.-Butyl-Gruppe trägt.

10. Polyisocyanatzusammensetzungen gemäß Anspruch 9, **dadurch gekennzeichnet, dass** Verbindung (D) ausgewählt ist aus der Gruppe bestehend aus 2,6-Bis-tert.-butyl-4-methylphenol (BHT), 3-[3,5-di-tert-butyl-4-hydroxyphenyl]-propionsäureester, Pentaerythrittetrakis(3-(3,5-di-tert-butyl-4-hydroxyphenyl)propionat, 3,3',3",5,5',5"-Hexa-tert-butyla,a',a"-(mesitylen-2,4,6-triyl)tri-p-kresol, 1,3,5-Tris(3,5-di-tert-butyl-4-hydroxybenzyl)-1,3,5-triazin-2,4,6(1H,3H,5H)-trion, Isoctyl-3-(3,5-di-tert-butyl-4-hydroxyphenyl)-propionat und Octadecyl-3-(3,5-di-tert-butyl-4-hydroxyphenyl)-propionat.

11. Verfahren zur Stabilisierung von Polyisocyanatzusammensetzungen, die neben Polyisocyanat (A) mindestens eine Verbindung (B) enthalten, die die Umsetzung von Isocyanatgruppen mit gegenüber Isocyanat reaktiven Gruppen zu beschleunigen vermag, **dadurch gekennzeichnet, dass** man der Polyisocyanatzusammensetzung zusätzlich mindestens eine Brønsted-Säure mit einem pKs-Wert kleiner 4 (C), ausgewählt aus der Gruppe bestehend aus C1) Dialkylphosphaten, C2) Arylsulfonsäuren und C3) Phosphonsäuredioctylester, mindestens ein Phenol (D), ein Lösungsmittel oder Lösungsmittelgemisch (E) und gegebenenfalls andere lacktypische Additive (F) beimengt.

12. Verfahren zur Herstellung von Polyurethanlacken, **dadurch gekennzeichnet, dass** man eine Polyisocyanatzusammensetzung gemäß Anspruch 1 bis 10 mit mindestens einem Bindemittel umsetzt, welches gegenüber Isocyanat reaktive Gruppen enthält.

13. Verfahren zur Herstellung von Polyurethanlacken, **dadurch gekennzeichnet, dass** man eine Polyisocyanatzusammensetzung gemäß den Ansprüchen 1 bis 10 mit mindestens einem Bindemittel ausgewählt aus der Gruppe bestehend aus Polyacrylatpolyolen, Polyesterpolyolen, Polyetherpolyolen, Polyurethanpolyolen, Polyharnstoffpolyolen, Polyetherolen, Polycarbonaten, Polyesterpolyacrylatpolyolen, Polyesterpolyurethanpolyolen, Polyurethanpolyacrylatpolyolen, Polyurethanmodifizierten Alkydharzen, Fettsäuremodifizierten Polyesterpolyurethanpolyolen, Kopolymerisaten mit Allylethern und Co- bzw. Pfropfpolymerisaten aus den genannten Stoffgruppen umsetzt.

14. Verwendung von Polyisocyanatzusammensetzungen gemäß einem der Ansprüche 1 bis 10 als Härter in Beschichtungsmitteln in Grundierungen, Füllern, pigmentierten Decklacken, Basislacken und Klarlacken im Bereich refinish, Autoreparatur-, Großfahrzeug- und Holzlackierung, sowie als Härter in Lacken, Klebstoffen und Dichtungsmassen.

15. Verwendung von Mischungen aus mindestens einer Brønsted-Säure mit einem pKs-Wert kleiner 4 (C), ausgewählt aus der Gruppe bestehend aus C1) Dialkylphosphaten, C2) Arylsulfonsäuren und C3) Phosphonsäuredioctylester, und mindestens einem sterisch gehinderten Phenol (D) zur Reduzierung der Farbzahl von Mischungen umfassend mindestens ein Polyisocyanat (A), erhältlich durch Umsetzung mindestens eines monomeren Isocyanats, mindestens eine Lewis-saure organische Metallverbindung (B), die die Umsetzung von Isocyanatgruppen mit gegenüber Isocyanat reaktiven Gruppen zu beschleunigen vermag.

## Claims

1. A polyisocyanate composition comprising
- (A) at least one polyisocyanate obtainable by reacting at least one monomeric isocyanate,
- (B) at least one Lewis-acidic organometallic compound able to accelerate the reaction of isocyanate groups with isocyanate-reactive groups,
- (C) at least one Brønsted acid having a pKa of less than 4, selected from the group consisting of C1) dialkyl phosphates, C2) arylsulfonic acids, and C3) dioctyl phosphonate,
- (D) at least one sterically hindered phenol.

2. The polyisocyanate composition according to claim 1, which further comprises a solvent or solvent mixture (E).

3. The polyisocyanate composition according to claim 1 or 2, which further comprises other, typical coatings additives (F).

4. The polyisocyanate composition according to any of the preceding claims, wherein the monomeric isocyanate is a diisocyanate selected from the group consisting of 1,6-hexamethylene diisocyanate, isophorone diisocyanate, 1,3-bis(isocyanatomethyl)cyclohexane, 4,4'-di(isocyanatocyclohexyl)methane, and 2,4'-di(isocyanatocyclohexyl)methane.

5. The polyisocyanate composition according to any of the preceding claims, wherein the polyisocyanate (A) contains isocyanurate, biuret, urethane and/or allophanate groups and/or iminooxadiazinedione groups.

6. The polyisocyanate composition according to any of the preceding claims, wherein the polyisocyanate (A) comprises isocyanurate, urethane and/or allophanate groups prepared using an ammonium carboxylate or ammonium α-hydroxycarboxylate catalyst.

7. The polyisocyanate composition according to any of the preceding claims, wherein the polyisocyanate comprises a polyisocyanate comprising isocyanurate groups, having a viscosity of 600-4000 mPa*s, and/or a low-viscosity urethane and/or allophanate having a viscosity of 150-1600 mPa*s.

8. The polyisocyanate composition according to claim 1, wherein the Lewis-acidic organometallic compound (B) comprises a metal selected from the group consisting of tin, zinc, titanium, zirconium, and bismuth, or mixtures of such compounds.

9. The polyisocyanate composition according to claim 1, wherein compound (D) contains exactly one phenolic hydroxyl group per aromatic ring and carries an optionally substituted tert-butyl group in the at least one ortho-position relative to the phenolic hydroxyl group.

10. The polyisocyanate composition according to claim 9, wherein compound (D) is selected from the group consisting of 2,6-bis-tert-butyl-4-methylphenol (BHT), 3-[3,5-di-tert-butyl-4-hydroxyphenyl]propionic ester, pentaerythritol tetrakis(3-(3,5-di-tert-butyl-4-hydroxyphenyl)propionate, 3,3',3",5,5',5"-hexa-tert-butyl-a,a',a''-(mesitylene-2,4,6-triyl)tri-p-cresol, 1,3,5-tris(3,5-di-tert-butyl-4-hydroxybenzyl)-1,3,5-triazine-2,4,6(1H,3H,5H)-trione, isooctyl 3-(3,5-di-tert-butyl-4-hydroxyphenyl)propionate, and octadecyl 3-(3,5-di-tert-butyl-4-hydroxyphenyl)propionate.

11. A method of stabilizing a polyisocyanate composition comprising in addition to polyisocyanate (A) at least one compound (B) able to accelerate the reaction of isocyanate groups with isocyanate-reactive groups, which comprises admixing the polyisocyanate composition additionally with at least one Brønsted acid having a pKa of less than 4 (C) selected from the group consisting of C1) dialkyl phosphates, C2) arylsulfonic acids, and C3) dioctyl phosphonate, at least one phenol (D), a solvent or solvent mixture (E), and optionally other, typical coatings additives (F).

12. A process for preparing a polyurethane coating material, which comprises reacting a polyisocyanate composition according to claim 1 to 10 with at least one binder which comprises isocyanate-reactive groups.

13. A process for preparing a polyurethane coating material, which comprises reacting a polyisocyanate composition according to any of claims 1 to 10 with at least one binder selected from the group consisting of polyacrylate polyols, polyester polyols, polyether polyols, polyurethane polyols, polyurea polyols, polyetherols, polycarbonates, polyester-polyacrylate polyols, polyester-polyurethane polyols, polyurethane-polyacrylate polyols, polyurethane-modified alkyd resins, fatty acid-modified polyester-polyurethane polyols, copolymers with allyl ethers, and copolymers and graft polymers of the stated groups of compounds.

14. The use of a polyisocyanate composition according to any of claims 1 to 10 as a curing agent in coating compositions, in primers, surfacers, pigmented topcoat, basecoat, and clearcoat materials in the segment of refinish, in automotive refinish, large-vehicle coating, and wood coating, and also as a curing agent in coating materials, adhesives, and sealants.

15. The use of a mixture of at least one Brønsted acid having a pKa of less than 4 (C) selected from the group consisting of C1) dialkyl phosphates, C2) arylsulfonic acids, and C3) dioctyl phosphonate, and at least one sterically hindered phenol (D) for reducing the color number of mixtures comprising at least one polyisocyanate (A), obtainable by reacting at least one monomeric isocyanate, and at least one Lewis-acidic organometallic compound (B) able to accelerate the reaction of isocyanate groups with isocyanate-reactive groups.

## Revendications

1. Compositions de polyisocyanate, contenant
- (A) au moins un polyisocyanate, pouvant être obtenu par transformation d'au moins un isocyanate monomérique,
- (B) au moins un composé organométallique acide au sens de Lewis, qui peut accélérer la transformation de groupes isocyanate avec des groupes réactifs envers isocyanate,
- (C) au moins un acide de Brønsted doté d'une valeur de pKs inférieure à 4, choisi dans le groupe constitué par C1) des phosphates de dialkyle, C2) des acides arylsulfoniques et C3) un ester de dioctyle d'acide phosphonique,
- (D) au moins un phénol encombré stériquement.

2. Compositions de polyisocyanate selon la revendication 1, qui contiennent de plus un solvant ou un mélange de solvants (E).

3. Compositions de polyisocyanate selon la revendication 1 ou 2, qui contiennent de plus d'autres additifs (F) typiques des laques.

4. Compositions de polyisocyanate selon une quelconque revendication précédente, **caractérisées en ce que** l'isocyanate monomérique est un diisocyanate choisi dans le groupe constitué par le diisocyanate de 1,6-hexaméthylène, le diisocyanate d'isophorone, le 1,3-bis(isocyanatométhyl)cyclohexane, le 4,4'-di(isocyanatocyclohexyl)méthane et le 2,4'-di(isocyanatocyclohexyl)méthane.

5. Compositions de polyisocyanate selon une quelconque revendication précédente, **caractérisées en ce que** le polyisocyanate (A) présente des groupes isocyanurate, biuret, uréthane et/ou allophanate et/ou des groupes iminooxadiazinedione.

6. Compositions de polyisocyanate selon une quelconque revendication précédente, **caractérisées en ce que** le polyisocyanate (A) contient des groupes isocyanurate, uréthane et/ou allophanate qui ont été préparés en utilisant un catalyseur de type carboxylate d'ammonium ou α-hydroxy carboxylate d'ammonium.

7. Compositions de polyisocyanate selon une quelconque revendication précédente, **caractérisées en ce que** le polyisocyanate est un polyisocyanate contenant des groupes isocyanurate, doté d'une viscosité de 600 à 4 000 mPa*s, et/ou un uréthane et/ou un allophanate à faible viscosité doté d'une viscosité de 150 à 1 600 mPa*s.

8. Compositions de polyisocyanate selon la revendication 1, **caractérisées en ce que** le composé organométallique (B) acide au sens de Lewis contient un métal choisi dans le groupe constitué par l'étain, le zinc, le titane, le zirconium et le bismuth, ou des mélanges correspondants de tels composés.

9. Compositions de polyisocyanate selon la revendication 1, **caractérisées en ce que** le composé (D) présente exactement un groupe hydroxy phénolique par cycle aromatique et porte un groupe tert-butyle éventuellement substitué dans l'au moins une position ortho par rapport au groupe hydroxy phénolique.

10. Compositions de polyisocyanate selon la revendication 9, **caractérisé en ce que** le composé (D) est choisi dans le groupe constitué par le 2,6-bis-tert-butyl-4-méthylphénol (BHT), un ester d'acide 3-[3,5-di-tert-butyl-4-hydroxyphényl]-propionique, le tétrakis(3-(3,5-di-tert-butyl-4-hydroxyphényl)propionate de pentaérythritol, le 3,3',3",5,5',5"-hexa-tert-butyl-a,a',a"-(mésitylène-2,4,6-triyl)tri-p-crésol, la 1,3,5-tris(3,5-di-tert-butyl-4-hydroxybenzyl)-1,3,5-triazine-2,4,6(1H,3H,5H)-trione, le 3-(3,5-di-tert-butyl-4-hydroxyphényl)-propionate d'isooctyle et le 3-(3,5-di-tert-butyl-4-hydroxyphényl)-propionate d'octadécyle.

11. Procédé pour la stabilisation de compositions de polyisocyanate qui, outre un polyisocyanate (A), contiennent au moins un composé (B), qui peut accélérer la transformation de groupes isocyanate avec des groupes réactifs envers isocyanate, **caractérisé en ce qu'**on ajoute à la composition de polyisocyanate de plus au moins un acide de Brønsted doté d'une valeur de pKs inférieure à 4 (C), choisi dans le groupe constitué par C1) des phosphates de dialkyle, C2) des acides arylsulfoniques et C3) un ester de dioctyle d'acide phosphonique, au moins un phénol (D), un solvant ou un mélange de solvants (E) et éventuellement d'autres additifs (F) typiques pour des laques.

12. Procédé pour la préparation de laques de polyuréthane, **caractérisé en ce qu'**on transforme une composition de polyisocyanate selon les revendications 1 à 10 avec au moins un liant qui contient des groupes réactifs envers isocyanate.

13. Procédé pour la préparation de laques de polyuréthane, **caractérisé en ce qu'**on transforme une composition de polyisocyanate selon les revendications 1 à 10 avec au moins un liant choisi dans le groupe constitué par des polyacrylatepolyols, des polyesterpolyols, des polyétherpolyols, des polyuréthanepolyols, des polyuréepolyols, des polyétherols, des polycarbonates, des polyesterpolyacrylatepolyols, des polyesterpolyuréthanepolyols, des polyuréthanepolyacrylatepolyols, des résines d'alkyde modifiées par un polyuréthane, des polyesterpolyuréthanepolyols modifiés par un acide gras, des copolymérisats avec des éthers d'allyle et des copolymérisats ou des polymérisats greffés à partir des groupes de matières mentionnés.

14. Utilisation de compositions de polyisocyanate selon l'une quelconque des revendications 1 à 10 en tant que durcisseur dans des agents de revêtement dans des apprêts, des agents de remplissage, des laques de finition pigmentées, des laques de base et des laques transparentes dans le domaine du laquage de retouche, de réparation automobile, de poids-lourds et de bois, ainsi qu'en tant que durcisseur dans des laques, des adhésifs et des masses d'étanchéification.

15. Utilisation de mélanges d'au moins un acide de Brønsted doté d'une valeur de pKs inférieure à 4 (C), choisi dans le groupe constitué par C1) des phosphates de dialkyle, C2) des acides arylsulfoniques et C3) un ester de dioctyle d'acide phosphonique, et d'au moins un phénol stériquement encombré (D) pour la réduction de l'indice de couleur de mélanges comprenant au moins un polyisocyanate (A), qui peut être obtenu par transformation d'au moins un isocyanate monomérique, d'au moins un composé organométallique (B) acide au sens de Lewis, qui peut accélérer la transformation de groupes isocyanate avec des groupes réactifs envers isocyanate.
